# EUROPEAN PATENT APPLICATION

(11) **EP 1 617 430 A1**
(43) Date of publication of application: **18.01.2006**
(21) Application number: 04726282.9
(22) Date of filing: 07.04.2004
(51) Int. Cl.: G11B 20/10, G10L 19/00, G06F 12/14

(54) **INFORMATION PROCESSING DEVICE AND INFORMATION PROCESSING METHOD**

(30) Priority: 24.04.2003 JP 2003119947; 24.04.2003 JP 2003119946
(71) Applicant: SONY CORPORATION, Tokyo 141-0001 (JP)
(72) Inventor: IWATSU, Takeshi, Shinagawa-ku, Tokyo 141-0001 (JP); KIMURA, Manabu, Shinagawa-ku, Tokyo 141-0001 (JP); KOIKE, Takashi, Shinagawa-ku, Tokyo 141-0001 (JP); GOTO, Takashi, Shinagawa-ku, Tokyo 141-0001 (JP)
(74) Representative: Merryweather, Colin Henry
(86) International application number: PCT/JP2004/005017
(87) International publication number: WO 2004/095449

(57) **Abstract**

The present invention is relative with an information processing method for carrying out processing unit data in which one contents are handled as a data unit. When contents data are to be reproduced/ output in succession, the tamper check processing for the next contents data, reproduced next to current contents data, being reproduced, is commenced at timing following the end of the processing of decryption and/or demodulation for the current contents data. This eliminates the time interval during which the processing of decryption/ demodulation for the current contents data and the tamper check processing for the next contents data are carried out simultaneously in parallel to prevent the processing load caused by concurrent execution of the tamper check processing and the processing of decryption/ demodulation from increasing.

## Description

### Technical Field

This invention relates to an apparatus and a method for executing processing on unit data in which one contents are handled as a data unit.

The present application contains subject matter related to Japanese Patent Applications JP 2003-119946 and JP 2003-119947, filed in the Japanese Patent Office on April 24, 2003, the entire contents of which being incorporated herein by reference.

### Background Art

Recently, AV (Audio and Video) contents data, such as audio data or video data, are encoded in some way or other prior to recording. Among various species of such recording, there is widely known the encoding for compression to provide data in a compressed form in accordance with a predetermined system. If contents data are encoded for compression, the data size in terms of contents as a unit is decreased, so that a recording medium of a finite size can be exploited efficaciously. On the other hand, the contents data can be downloaded over a network in a shorter time.

The encoding is also carried out for encryption. This encryption is used in general for copyright protection. That is, for reproducing contents data, encoded for encryption, keys for decryption are afforded only on such occasions where the reproduction of the contents data is allowed. The contents data can be reproduced/output on decoding for encryption with the use of these keys.

As for the encoded contents key, there are occasions where the plural contents data exhibit continuity as regards the substance of the contents. If, in such case, the contents are simply reproduced in order, the resulting reproduction output is simply self-completed from contents data to contents data, while continuity may not be afforded to neighboring contents data. The Japanese Laid-Open Patent Publication JP 2002-112341 shows a technique in which contents data neighboring to each other in the sequence of reproduction are encoded such as to maintain continuity of the reproduction/ output.

If the configuration of the encoding technique, designed to afford continuity of the reproduction/ output among plural contents data, as described above, is used, it may be an occurrence that the continuity of the reproduction/ output cannot be maintained under the following conditions:

For example, it is a frequent occurrence in recent years that the processing of decoding for encryption as well as encoding for compression described above is executed as software processing. In such case, the CPU, for example, executes the processing in accordance with a program for processing for decoding.

In such configuration, there are occasions wherein the CPU, carrying out processing of decoding of contents data to be currently reproduced/ output, has to carry out another different processing in parallel with the processing of decoding.

In general, the processing of decoding of AV contents data is heavy processing retained to impose a high CPU take-up ratio. Now, suppose that the processing that has come to be carried out in parallel with this processing of decoding is also a heavy processing with a rather high CPU take-up ratio. In such case, a heavy load tends to be imposed on the CPU, with the result that the processing of decoding is retarded, with the result that the continuity of the reproduction/ output cannot be maintained. Under these conditions, there is a possibility that the reproduction/ output is interrupted even within the contents data.

For combating these inconveniences, it may be contemplated to use a CPU with a higher performance and a higher processing capability. However, from the considerations of costs, the usual practice is to use a CPU with a processing capability that matches the system. Hence, if the level of the processing capability that fully assures e.g. the above-described continuity of the reproduction output is redundant with the system in use, it is undesirably not possible to strike an optimum balance between the assurance of the performance and the cost.

### Disclosure of the Invention

It is an object of the present invention to provide a novel method and apparatus whereby it is possible to overcome the above-described problems inherent in the conventional technique.

It is more specific object of the present invention to provide a method and an apparatus for information processing in which, when the processing of decoding is carried out under the conditions that the CPU used is of a certain processing capability, the CPU take-up ratio will be lower than a certain value.

For accomplishing the above objects, the present invention provides an information processing apparatus comprising processing means for carrying out at least a processing of decoding encoded unit data and a pre-decoding processing related to the unit data, the pre-decoding processing being carried out prior to the processing of decoding, storage means where decoded data obtained on the processing of decoding are written and transiently stored, and outputting means from which the decoded data stored in the storage means is continuously read out and output as data for reproduction/ outputting. The processing means commences the processing of decoding of the unit data after the end of the pre-decoding processing related to the unit data.

The present invention also provides an information processing method comprising pre-decoding processing relevant to encoded unit data, processing of decoding for decoding the unit data after the end of the pre-decoding processing, processing of storage for transiently storing decoded data obtained on processing for decoding, and outputting processing for successively reading out the decoded data transiently stored by the processing of storage and for outputting the read-out decoded data as data for representation/ outputting.

Other objects and advantages of the present invention will become apparent from the following explanation of certain preferred embodiments thereof especially when read in conjunction with the drawings.

### Brief Description of the Drawings

Fig.1 is a block diagram showing an illustrative configuration of a recording and/or reproducing apparatus according to the present invention.
Fig.2 shows reproduction processing of encrypted contents according to the present invention.
Fig.3 is a timing chart showing a typical processing sequence in case of continuous reproduction of the encrypted contents.
Fig.4 is a timing chart showing a processing sequence in case of continuous reproduction of encrypted contents embodying the present invention.
Fig.5 is a timing chart showing the operations of reproduction processing in case of continuous reproduction of encrypted contents of usual reproduction time by setting a buffer capacity to a usual capacity.
Fig.6 is a timing chart showing the operations of reproduction processing in case of continuous reproduction of encrypted contents of short reproduction time by setting a buffer capacity to a usual capacity.
Fig.7 is a timing chart showing typical operations of reproduction processing in case of continuous reproduction of encrypted contents of short reproduction time by setting a buffer capacity to short-time continuous reproduction.
Fig. 8 is an explanatory view showing another typical reproduction processing for encrypted contents according to the present invention.
Fig.9 is a timing chart showing a processing sequence in case of continuous reproduction of encrypted contents.
Fig.10 is a timing chart showing typical operations for reproduction processing in case of continuous reproduction of encrypted contents, inclusive of fringe demodulation processing, with processing time within a usual range, by setting a buffer capacity to a usual capacity.
Fig.11 is a timing chart showing typical operations for reproduction processing in case of continuous reproduction of encrypted contents, inclusive of fringe demodulation processing, by setting a buffer capacity to a usual capacity, with processing time outside a usual range.
Fig.12 is a timing chart showing typical operations for reproduction processing in case of continuous reproduction of encrypted contents, inclusive of fringe demodulation processing, with processing time outside a usual range, by setting a buffer capacity to a capacity configured to cope with long-time processing. Best Mode for Carrying out the Invention

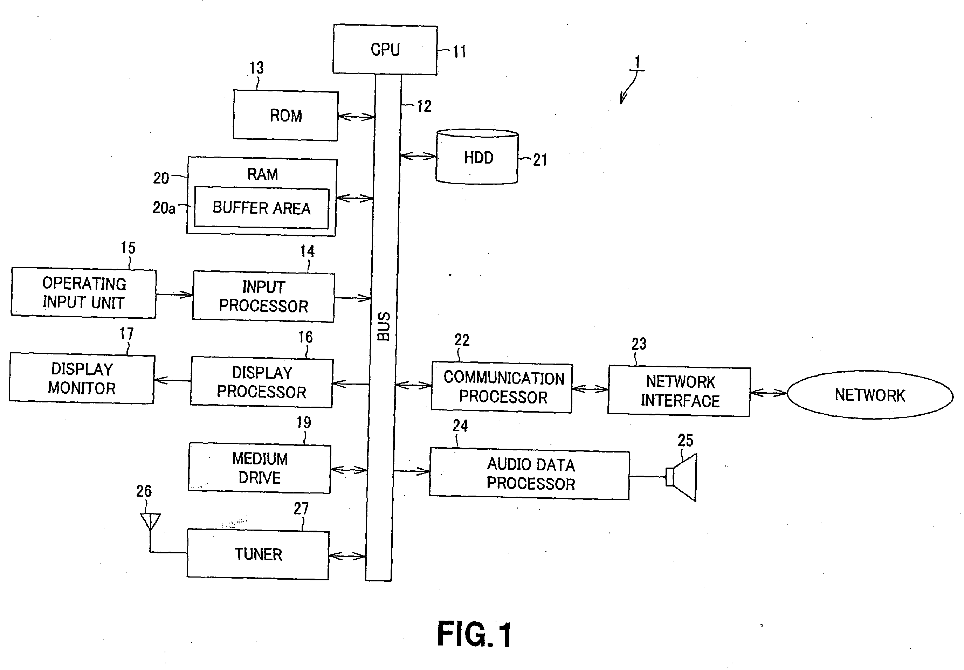

An information processing apparatus, embodying the present invention, includes a CPU (Central Processing Unit) 11 for performing overall control and calculation processing operations for a recording and/or reproducing apparatus 1, based on a program booted, as shown in Fig.1. The CPU 11 takes charge of communication operations, mediated e.g. by a network, input/output operations for a user, reproduction or ripping of contents from recording media, storage of contents on a HDD 21, or control operations therefor. This CPU 11 exchanges control signals or data with different components of the circuitry over a bus 12.

In a ROM 13, operational programs, run by the CPU 11, program loaders, a variety of coefficients for calculations or parameters used in programs, are stored.

In a RAM 20, the program run by the CPU 11 is provisionally stored. The RAM is also used as a data area or a task area necessary for the CPU 11 to execute various processing operations. In the present embodiment, there may be provided an area as a buffer area 20a as typical of this data area or task area. This buffer area 20a may, for example, be an area in which to store transiently as-decoded contents data in reproducing and outputting contents data read out from e.g. a recording medium loaded in a medium drive 19 or from the HDD 21.

The following explanation is made for a case where audio contents data, that may be recorded and/or reproduced for a recording and/or reproducing apparatus 1 of the present invention, is audio contents data.

An operating input unit 15 is a site comprised of a variety of actuators, such as actuating keys, a jog dial or a touch panel, provided to a casing of the recording and/or reproducing apparatus 1. Meanwhile, a keyboard or a mouse for actuating the GUI (Graphical User Interface) may also be provided as the operating input unit 15. The operating input unit 15 may also be a remote controller.

The information entered on the operating input unit 15 is processed in a predetermined manner by an input processor 14 and thence transmitted to the CPU 11 as an operational command. The CPU 11 performs control or calculations, as necessary, for producing operations as an apparatus responsive to the input operating command.

As a display monitor 17, a display device, such as a liquid crystal device, is connected, for demonstrating various information materials.

When the CPU 11 sends the display information to a display processor 16, depending on various operating states, input states or the states of communication, the display processor 16 demonstrates display data, as supplied, on the display monitor 17.

For example, in the instant embodiment, a GUI picture for managing and reproducing an audio file is demonstrated in accordance with a program for reproducing and managing a ripped audio file.

The medium drive 19 for this case is a drive capable of managing and reproducing a predetermined recording medium. The medium drive 19 may also be a drive capable not only of reproducing but also of recording a predetermined recording medium.

Although there is no limitation to the recording media the medium drive 19 can cope with, these recording media may also be a variety of disc-shaped recording media, such as CD, DVD or Mini-Discs. Or, the recording media may also be formed by memory devices, such as flash memories. The media drive may also be separate drives, configured to cope with these media separately, and which are separately connected to the bus 12.

For example, if the user has actuated the operating input unit 15, by way of issuing a command for reproduction by the medium drive 19, the CPU 11 commands the medium drive 19 to reproduce the medium. Responsive thereto, the medium drive 19 has access to specified data of the recording medium loaded thereon to read out the so accessed data.

In case the data thus read out are audio contents, the data are decoded by processing on the CPU 11, as necessary, and are thence transmitted to an audio data processor 24. The data are processed by the audio data processor 24 with sound field processing, such as equalizing, volume adjustment, D/A conversion or amplification, so as to be output via a loudspeaker 25.

The data reproduced by the medium drive 19 may also be stored in the HDD 21, as audio data file, under control by the CPU 11. That is, the audio data file, acquired by the so-called ripping, may be stored as contents.

The audio data file may be in the form of digital audio data with the sampling frequency of 44.1 kHz and a quantization step of 16 bits, in accordance with the CD format, or in the form of compressed data obtained on data compression in accordance with a preset system for saving the capacity of the HDD 21. Although there is no limitation to the compression system, the ATRAC (Adaptive Transform Acoustic Coding) system or the MP3 (MPEG Audio layer III) system, for example, may be used.

A tuner 27 is e.g. an AM-FM radio tuner, and demodulates broadcast signals, received by an antenna 26, under control by the CPU 11. Of course, the tuner may be a TV tuner, a BS tuner or a digital broadcast tuner.

The demodulated broadcast speech signals are processed in a preset manner by the audio data processor 24, and output as broadcast speech over the loudspeaker 25.

A communication processor 22 encodes and decodes transmitted data and received data, respectively, under control by the CPU 11.

A network interface 23 sends transmitted data, encoded by the communication processor 22, to a predetermined apparatus, configured to cope with an external network, over a network. The network interface 23 also delivers signals, transmitted over the network from the apparatus, configured to cope with the external network, to the communication processor 22. This communication processor 22 transmits the information received to the CPU 11.

The recording and/or reproducing apparatus 1 is not limited to the apparatus shown in Fig.1 and may be any of a variety of other suitable apparatus.

For example, the recording and/or reproducing apparatus may also be provided with an interface for peripheral equipment, in accordance with communication systems, exemplified by USB (Universal Serial Bus), IEEE1394 or Bluetooth.

The audio contents data, downloaded over the network from the network interface 23, or the audio contents data, transmitted via interfaces, exemplified by the USB or IEEE1394, may be stored in the HDD 21.

There may further be provided terminals used for connection to a microphone or to an external headphone, a video output terminal, operatively associated with DVD reproduction, a line connection terminal, or an optical digital connection terminal.

There may also be formed a PCMCIA slot or a memory card slot for enabling data exchange with external information processing apparatus or audio apparatus.

As may be understood from the foregoing explanation, which refers to Fig.1, the recording and/or reproducing apparatus 1 according to the present invention is able to reproduce and output audio contents data as speech. For example, if contents data are recorded on a recording medium, loaded on the medium drive 19, the contents data, read out from the medium, may be reproduced and output. In addition, the contents data, stored in the HDD 21, may be read out, and the data, so read out, may be reproduced and output.

In addition, the present embodiment is configured so that audio contents data, encoded for compression in accordance with a predetermined compression encoding system and further encrypted in accordance with a predetermined encryption system, referred to below simply as 'encrypted contents', may be reproduced and output as speech.

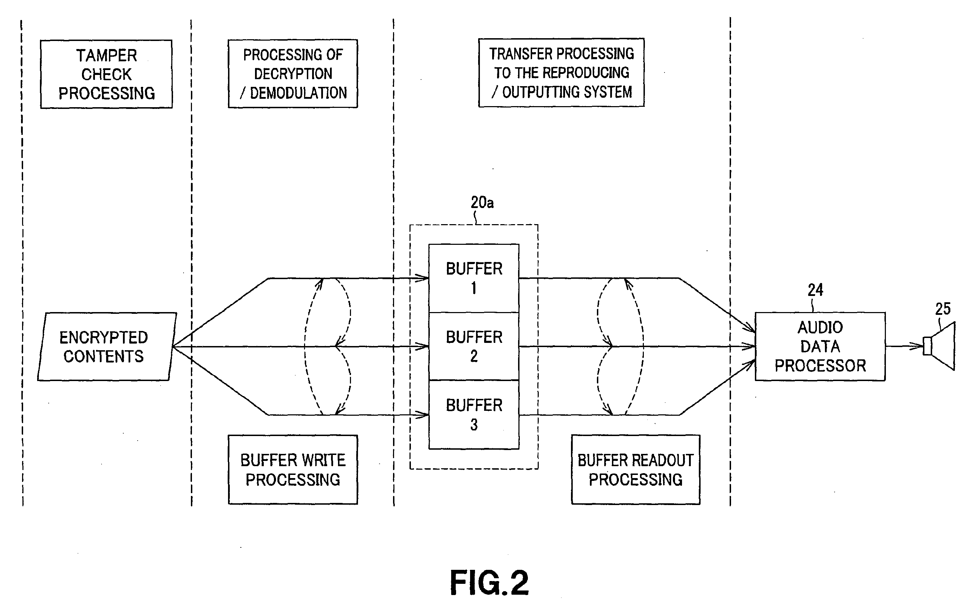

The processing sequence for reproducing and outputting these encrypted contents as speech will now be explained with reference to Fig.2. In this figure, there is shown a case where sole encrypted contents are reproduced and output. It is assumed that, for simplicity of explanation, the encrypted contents being reproduced are stored in the HDD 21.

It should be noted however that the processing of reproducing the encrypted contents according to the present invention, now explained, may comprehensively be applied to any case of reproducing encrypted contents by the recording and/or reproducing apparatus 1 according to the present invention, such as, for example, a case of reading out and reproducing the encrypted contents, recorded on a recording medium, or a case of reproducing the encrypted contents as acquired over the network.

As for the encrypted contents, stored in the HDD 21, and which are to be reproduced, tamper check processing is carried out, first of all, in order to verify whether or not the data has been subjected to illicit data tampering. This tamper check processing is carried out by the CPU 11 in accordance with a program for reproducing the encrypted contents. The program for reproducing the encrypted contents is stored as it is installed on the HDD 21. In running this program, it is read out from the HDD 21 so as to be temporarily stored in the RAM 20.

If, on completion of the aforementioned tamper check processing, it is recognized that no illicit data tampering has been done to the encrypted contents, these contents, read out from the HDD 21 and sequentially transmitted, are processed with processing of decryption/ demodulation.

This processing of decryption/ demodulation is also carried out by the CPU 11 in accordance with the program for reproducing the encrypted contents, and the processing for decryption is carried out on the data of the encrypted contents transmitted from one preset processing unit to another. The decrypted contents data, that is, data obtained on decryption, are subjected to demodulation (decompression) in accordance with a procedure reversed from the procedure for encoding by compression. This yields decompressed digital audio data.

A data string, as digital audio data, obtained on processing for decryption/demodulation, is written in order, by processing for writing in the buffers, in a plurality of buffers, obtained on splitting a buffer area 20a.

It is noted that the processing of decryption/ demodulation is the processing for actually decrypting and decompressing the encrypted contents to demodulate the digital audio data. In short, it is the processing of decryption and decompression. On the other hand, the tamper check processing is itself not decryption and is the processing, execution of which prior to decryption is indispensable.

The buffer area 20a is provided with a plurality of buffers. Here, a case is shown in which there are provided three buffers 1 to 3. It is assumed that, for each of these plural buffers, the same data capacity is afforded. In actuality, each buffer is formed as a ring buffer.

The processing for writing in the buffers is carried out as follows:
In a stage prior to the start of the processing for decryption/ demodulation, the buffers 1 to 3 are in vacant states. When the processing of decryption/ demodulation is commenced and it is time for writing data in the buffers, the data is first written in the buffer 1. When data is stored in the buffer 1 to its full capacity, data is written in the buffer 2. When data is stored in the buffer 2 to its full capacity, data is written in the buffer 3. For confirmation, data writing in the buffer 2 occurs at a rate faster than the data readout rate from the buffer. The data written and stored in the buffers 1 to 3 exhibit temporal continuity, provided that the operation is carried out in a usual manner. That is, the data thus written and stored are continuous data as the reproduced output sound. If, in the course of a process in which writing is commenced in the buffer 1 and sequentially executed in the next buffers 2 and 3, data is stored in the buffer 1 in more than a predetermined volume, data commences to be read out, at a preset data rate, beginning from the data initially stored in the buffer 1, by way of memory readout from the buffer area 20a.

Turning to the buffer readout processing, when the entire data stored in the buffer 1 has been read out, data stored in the buffer 2 is read out. The data stored in the buffer 2 are then read out. When the entire data stored in the buffer 2 has been read out, data stored in the buffer 3 is read out.

Turning to the buffer write processing, when the writing is completed up to the buffer 3, data is written as from the buffer 1 from which data has been completely read out and which has now become void. In similar manner, data is then written sequentially in the buffers 2 and 3, from which data has been completely read out and which have now become void.

That is, as for the processing of writing in the buffers 1 to 3, the writing repeatedly occurs in the order of the buffers 1, 2 and 3, specifically, data is written in the buffers in the vacant state, at a predetermined data rate.

As for data readout from the buffers 1 to 3, data are read out from the buffers 1, 2 and 3, in this order, at a rate slower than the write rate, with a time delay corresponding to storage of a quantity of data not less than a predetermined quantity by data writing.

With this write/ readout processing for the buffers 1 to 3, data is stored in at least one of the buffers 1 to 3, as long as there is produced no so-called memory overflow or memory underflow, thus assuring continuity of reproduced data. If the readout operation is that described above, the write processing in the buffers is such that, in case data is stored in the totality of buffers, data writing is discontinued and, when the buffer in which writing is to be made first in the write sequence has become void, data writing is commenced. That is, the operation may become intermittent, at least insofar as the processing of writing in the buffers is concerned.

In accordance with the above-described processing for writing/ readout for the buffers, transfer processing to a reproducing/ outputting system is commenced in synchronism with start of readout of data from the buffers.

This transfer processing to the reproducing/ outputting system is carried out by the CPU 11 in accordance with the program for reproducing the encrypted contents, and is such a processing in which data read out from the buffer is transmitted to a reproduction signal processing system (reproducing/ outputting system) for reproducing/ outputting the readout data.

The reproduction signal processing system (reproducing/ outputting system) in this case is the audio data processor 24 in the apparatus shown in Fig.1. The transfer processing for the reproducing/ outputting system is such a one in which data read out from the buffers is transmitted over bus 12 at a desired data rate such that continuity of audio data to be reproduced and output will be maintained in the audio data processor 24.

The processing of writing data in the buffers is the processing of writing digital audio data by processing of decryption/ demodulation in the buffers. The data readout by readout from the buffers is transferred to the audio data processor 24 by the transfer processing to the reproducing/ outputting system. Thus, there is a time interval during which the processing of decryption/ demodulation occurs in parallel and simultaneously with the transfer processing to the reproducing/outputting system.

The audio data processor 24 is continuously supplied with digital audio data read out from the buffers as described above. The audio data processor performs preset signal processing, inclusive of D/A conversion, on the digital audio data, thus supplied thereto, with the result that the data is ultimately output as speech from the loudspeaker 25. It is noted that, as long as continuity of the digital audio data, supplied to the audio data processor 24, is maintained, continuity as speech of the contents, output from the loudspeaker 25, may also be maintained.

As may be understood from the above explanation, which refers to Fig.2, it may be said that there are three basic processing operations to be carried out by the CPU 11 in accordance with the program configured for reproducing the encrypted contents in reproducing and outputting given encrypted contents, that is, the reproduction processing configured for coping with the encrypted contents, that is, tamper check processing;
processing of decryption/ demodulation; and
transfer processing to the reproducing/ outputting system. Since the tamper check processing checks for authenticity of the substance of the data contents, based on whether or not the data was tampered with, this check processing needs to be carried out at any rate in the pre-stage of the processing of decryption/demodulation. That is, when given contents are targeted, the tamper check processing and the processing of decryption/ demodulation are not executed simultaneously, but the order of execution of the tamper check processing 0 the processing of decryption/ demodulation is to be observed. However, there are occasions where the processing of decryption/ demodulation and the transfer processing to the reproducing/ outputting system are executed simultaneously, parallel to each other, as previously explained.

Meanwhile, the processing for writing in the buffers of the buffer area 20a is ancillary to the processing of decryption/ demodulation, while the readout processing is ancillary to the transfer processing to the reproducing/ outputting system.

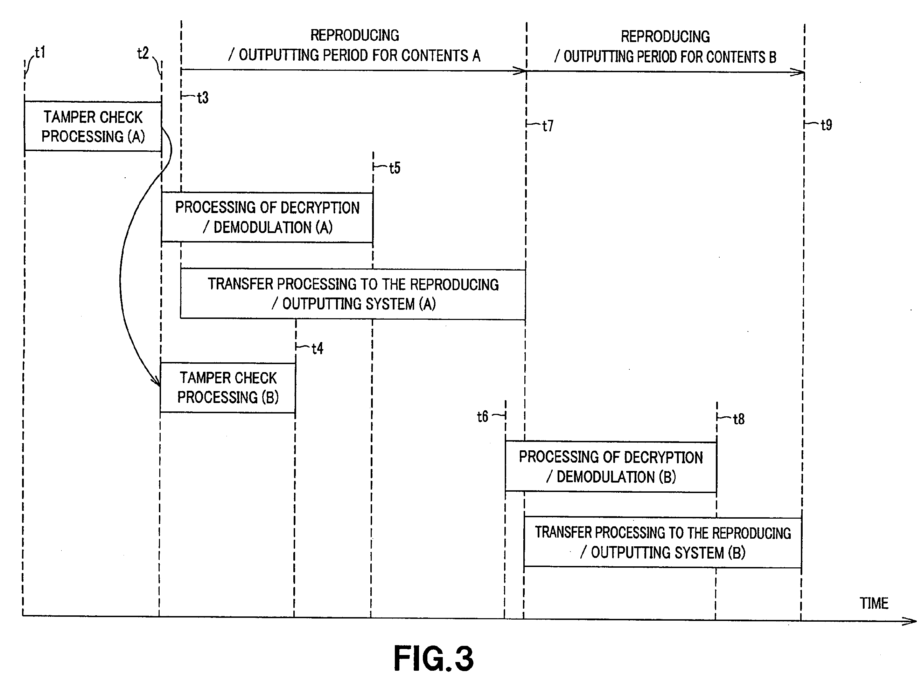

It may be contemplated that the reproducing processing for coping with the encrypted contents, in the continuous reproduction of the encrypted contents, is usually carried out at an execution timing, shown for example in the timing chart of Fig.3.

The case of starting contents reproduction from the contents A and subsequently carrying out the contents B in succession is taken as an example for explanation.

If a command for starting the reproduction of the contents A is obtained, the tamper check processing, with the contents A as target, is carried out first at a time point t1. Meanwhile, in the present embodiment, the time needed for the tamper check processing is approximately constant without dependency upon the substance of the encrypted contents. However, the time needed for the tamper check processing may be varied from contents to contents depending on the particular encryption system used.

When the tamper check processing, with the contents A as target, is finished at a time point t2 when a certain time has elapsed as from the time point t1, the processing of decryption/ demodulation, with the contents A as the target, commences as from this timing t2.

Responsive to start of the execution of the processing of decryption/demodulation, with the contents A as the target, the operation of storing the digital audio data, obtained by the demodulation processing, also commences. When certain time has elapsed, the stored capacity in the buffers exceeds a certain value, so that readout becomes possible. This timing is indicated by a time point t3.

Hence, the transfer processing to the reproducing outputting system, with the contents A as a target, commences at the time point t3. This transfer processing to the reproducing outputting system is the processing of transferring the digital audio data, read out from the buffers, to the reproducing/ outputting system, that is, to the audio data processor 24.

The outputting of the reproduction sound, as the contents A, commences at this time point t3.

For example, the processing of decryption/ demodulation for the encoded data, as the contents A, comes to a close at a time point t5. At this time point t5, the writing in the buffers of the digital audio data of the contents A, obtained by the processing of decryption/ demodulation, also comes to a close. At this time, the digital audio data, which has as yet not been read out, is stored in the buffers.

Hence, even after time point t5, the transfer processing to the reproducing/outputting system for the contents A is continued until the entire data stored in the buffers is read out. In this case, the transfer processing to the reproducing/outputting system for the contents A has come to a close at a time point t7 and, in keeping therewith, the reproduction output sound as the contents A also comes to a close at this time point t7. From this it follows that the reproducing/ outputting time period, during which the contents A are reproduced and output, is the time period as from time point t3 until time point t7.

The reproducing processing for coping with the encrypted contents for the contents B, to be reproduced next in succession to the contents A, is carried out as follows:

For reproducing the contents A and B in succession, in this order, the start timing of the transfer processing to the reproducing/ outputting system for the contents B needs to be contiguous to the end timing of the transfer processing to the reproducing/ outputting system for the contents A. That is, in this case, the transfer processing to the reproducing/ outputting system for the contents B needs to be started as from the timing t7 as shown.

Hence, in order to assure that the readout processing from the buffers will be stared as from the time point t7, the processing of decryption/ demodulation for the contents B is to be commenced at a time point t6 which precedes the time point t7, as basic time point, by a time duration needed for storage of a preset quantity of digital audio data.

Consequently, the tamper check processing for the contents B needs to be executed at a stage temporally previous to this time point t6.

Thus, in the case shown in Fig.3, as a reasonable processing sequence for such case, the tamper check processing for the contents B is carried out in succession to the end of the tamper check processing for the contents A. That is, in Fig.3, the tamper check processing for the contents A is terminated at the time point t2, and the tamper check processing for the contents B is commenced at this time point t2. This tamper check processing for the contents B is terminated at the time point t4.

It should be noted in this connection that, as a matter of actual processing for reproducing the encrypted contents, the tamper check processing and the processing of decryption/ demodulation, out of the above three processing operations, namely the tamper check processing, processing of decryption/ demodulation and the transfer processing to the reproducing outputting system, represent heavy processing with a higher take-up ratio for the CPU 11. The transfer processing to the reproducing/ outputting system represents lighter processing, with a low take-up ratio for the CPU 11, because this processing simply issues a command for transferring the digital audio data, read out from the buffers, over bus 12, with the take-up ratio for the CPU 11 being correspondingly low.

Turning now to the timing of the processing sequence, shown as an example in Fig.3, it is seen that, during the time period as from the time point t2 until time point t4, the processing of decryption/ demodulation for the contents A and the tamper check processing for the contents B are executed simultaneously parallel to each other.

That is, from the perspective of the CPU 11, the two processing operations, retained to be high in the CPU take-up ratio, are carried out simultaneously, thus accounting for the high actual CPU take-up ratio.

With this state of processing by the CPU 11, during the above time period of t2-t4, there is a risk that delay is caused to the processing operations, carried out simultaneously, depending on the performance of the CPU 11. Hence, in the case of Fig.3, for example, the processing speed needed for the processing of decryption/demodulation for the contents A cannot be maintained, thus possibly causing underflow in the buffers and resultant inconveniences, such as interruption of the voice of the reproduced output.

Moreover, there are occasions where a program of an application other than the application of reproducing encrypted contents is run on the recording and/or reproducing apparatus 1 according to the present invention. For example, since the recording and/or reproducing apparatus 1 of the present embodiment has e.g. a networking function, it is probable that an application such as a Web browser, exploiting this function, or a mailer for transmitting/ receiving an E-mail, is installed on the HDD 21, and booted as necessary.

If, when the reproducing processing program for the encrypted contents and the other application programs, such as those described above, for example, are being run, the state of high CPU take-up ratio, as indicated by the time period of t2 to t4, is produced, the probability is high that the interruption of the reproducing outputting speech, as described above, is produced. Conversely, the operation of other application programs becomes heavy, such that the operation may be slowed down.

Thus, in the processing sequence for the reproducing processing, configured for coping with the encrypted contents, the heavy processing operations, retained to be high in the CPU take-up ratio, may give rise to undesirable effects on the operation of the apparatus, if these operations are carried out in parallel with the processing of reproducing the encrypted contents.

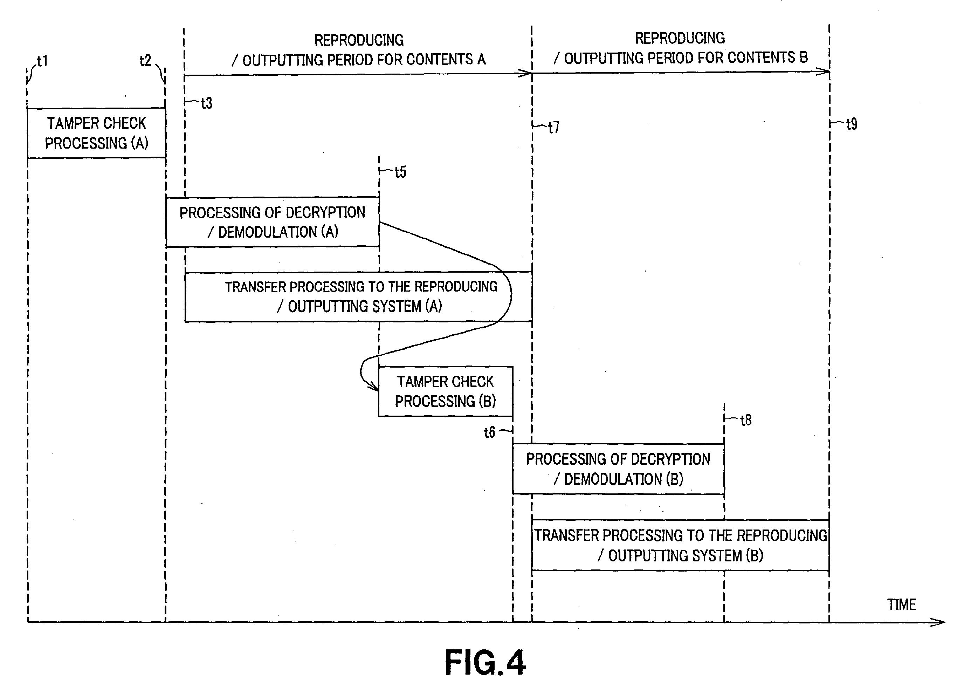

Consequently, with the present embodiment, the processing for the reproduction processing for coping with the encrypted contents is carried out as shown in Fig.4. In the processing sequence, shown in Fig.4, such a case in which reproduction is started from the contents A as encrypted contents, and the contents B are reproduced in succession, is again taken as an example.

In this case, the timing for each of the tamper check processing, processing of decryption/ demodulation and the transfer processing to the reproducing outputting system, for the contents A as target, is similar to that in Fig.3.

The timing for each of the tamper check processing, processing of decryption/ demodulation and the transfer processing to the reproducing outputting system, for the contents B as target, is also similar to that in Fig.3, because the contents B need to be reproduced in succession to the contents A.

With this in mind, the tamper check processing for the contents B, as target, is commenced, in the present embodiment, at a time point t5, which is the time point of termination of the processing of decryption/ demodulation for the contents A, as shown in Fig.4.

That is, with the present embodiment, the program algorithm is such that the tamper check processing for the contents reproduced next will be carried out in succession to the processing of decryption/ demodulation for the contents currently reproduced/ output.

The tamper check processing for the contents B by the above-described processing sequence is carried out after completion of the processing of decryption/demodulation for the contents A, by taking advantage of the time interval during which the digital audio data stored in the buffers are read out and reproduced/output by the transfer processing to the reproducing/ outputting system for the same contents A.

In Fig.4, the tamper check processing for the contents B is terminated at a time point t6 when the processing of decryption/ demodulation for the contents B commences. This shows that it is sufficient if the tamper check processing for the contents B comes to a close at the time point t6 at the latest. In actuality, the tamper check processing for the contents B may be terminated at a time point previous to the start time point of the processing of decryption/ demodulation for the contents B.

With such processing sequence, the time period during which, in the consecutive reproduction / outputting of the encrypted contents, the processing of decryption/ demodulation and the tamper check processing, both of which are high in the CPU take-up ratio, are carried out simultaneously, may be eliminated. This enables the CPU take-up ratio, configured to cope with reproduction of the encrypted contents, to be appreciably lower than in the conventional system, to avoid undesirable operations in which the CPU take-up ratio becomes higher to render it impossible to maintain continuity of the reproduction/ output. On the other hand, certain allowance may be afforded to the CPU capacity when other applications, for example, are run simultaneously.

It will be understood that, in the processing sequence, shown in Fig.4, the timing of execution of the tamper check processing for the contents reproduced next takes advantage of the operation of transiently storing the decrypted/ demodulated digital audio data in the buffers.

That is, the time period as from the time of termination of the processing of decryption/ demodulation of the contents currently reproduced until the start of the tamper check processing for the next contents is a time period during which the digital audio data stored in the buffers are read out and reproduced/output. Since this period is such a period during which, as the reproducing processing for coping with the encrypted contents, with the current contents as target, only the transfer processing to the reproducing outputting system for the current contents is carried out, while the processing of decryption/ demodulation is not carried out, the tamper check processing for the next contents is carried out during this period.

Thus, in order that the termination of the tamper check processing for the next contents and the consecutive reproduction of the next contents will be carried out satisfactorily, it is sufficient that the time duration as from the end of the processing of decryption/ demodulation for the current contents until readout of the digital audio data stored in the buffers to terminate the reproduction/ outputting is longer than the time needed for the tamper check processing.

If, in the present embodiment, consecutive reproduction of the encrypted contents, having ordinary presumable reproduction time, is presupposed, the capacity values of the respective buffers in the buffer area 20a are set in order to assure that the next contents will be reproduced in succession to the end of the tamper check processing of the same contents.

The speech reproduction of the encrypted contents is started responsive to start of the transfer processing to the reproducing/ outputting system, including buffer readout processing, after the processing of decryption/ demodulation is started following the tamper check processing and a quantity of data in excess of a predetermined quantity is stored in the buffer. That is, the time interval until storage of more than a preset quantity of data in the buffer is a standby time during which the reproduction is not commenced.

Turning to the start of data readout from the buffers, responsive to start of contents reproduction, in the present embodiment, if there are provided three buffers 1 to 3, data writing in the buffer 1 to its full capacity is deemed to be the data storage in more than the predetermined amount, and accordingly the readout from the buffers is commenced. Thus, if the capacities of the buffers 1 to 3 are increased, the quantity of data storage would be correspondingly increased. However, this is not desirable because the standby time until the start of reproduction is then protracted.

In light of the above, the usual capacities of the buffers 1 to 3 are set, in the present embodiment, in consideration of two conditions, namely
1. the condition that, on the premises that the encrypted contents, having usual presumable reproduction time, are continuously reproduced, the end of the tamper check processing for the next contents and the consecutive reproduction of the next contents are guaranteed, that is, the next contents are reproduced in succession to the end of the tamper check processing for the same next contents and
2. the condition that the standby time until start of reproduction is comprised within a range that is practically not of a problem,
as described above.

However, with the usual capacities of the buffers 1 to 3, there may be occasions where the former condition may not be met, in case the encrypted contents to be reproduced in succession are of extremely short duration, such that it may become impossible to maintain the continuity of the reproduction/ output between the current contents and the next contents.

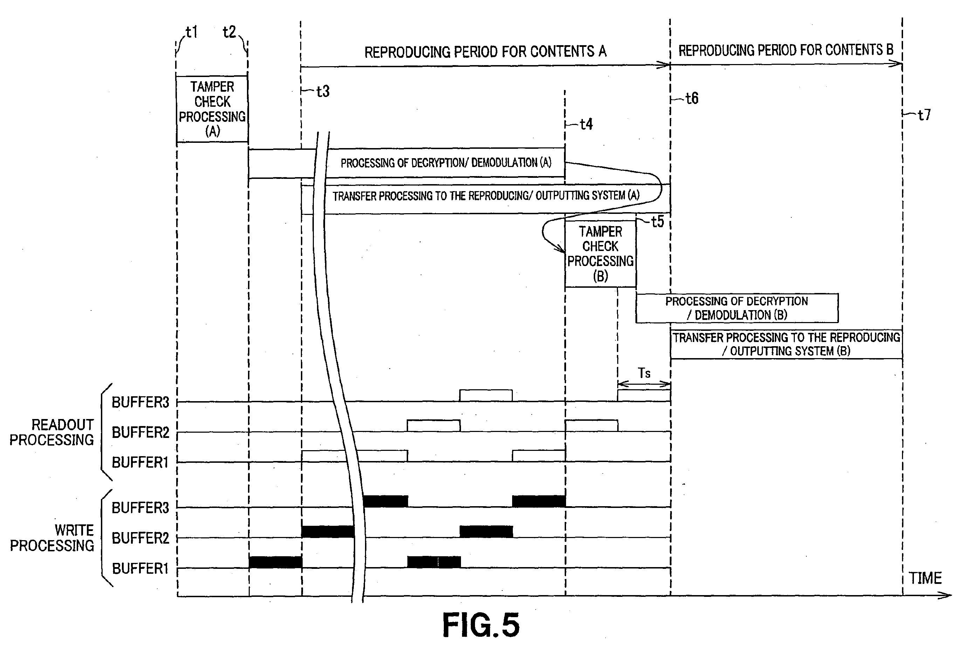

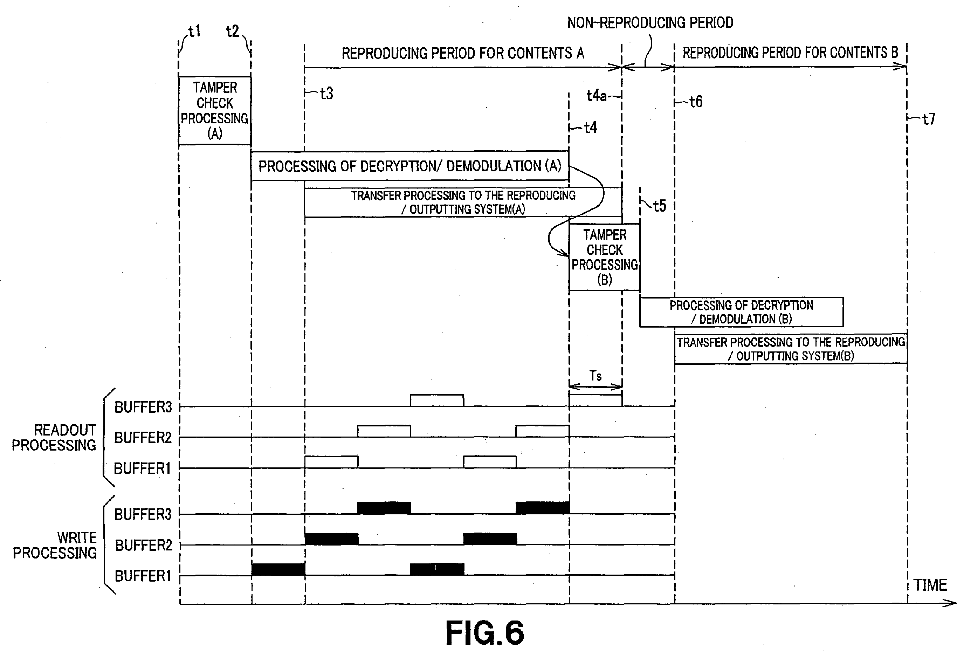

This point will now be explained with reference to Figs.5 and 6.

Fig.5 shows a case where, of the encrypted contents A and B, reproduced continuously, at least the contents A, reproduced first, are of ordinarily presumable time duration, and the contents A and B are reproduced consecutively. In Fig.5, the portions in the buffers 1 to 3, indicated by outline bars, represent the readout time period. On the other hand, the portions in the buffers 1 to 3, indicated by black bars, represent the write time period.

In this case, the tamper check processing is carried out for the contents A during the period as from the time point t1 until time point t2, and the processing of decryption/ demodulation on the contents A is carried out as from the time point t2. The writing in the buffer 1 is carried out responsive to the start of the processing of decryption/ demodulation on the buffer 1. This writing in the buffer 1 comes to a close at a timing t3. The ensuing processing of decryption/ demodulation is writing in the buffer 2, then in the buffer 3 and then in the buffer 1, this sequence being repeated in the same order.

Responsive to the end of completion of writing in the buffer 1 at the time point t3, the transfer processing to the reproducing/ outputting system for the contents commences at the time point t3. The readout from the buffer 1 is carried out at the same time point t3. This readout from the buffers is from the buffers 2 and 3 in this order, and then from the buffer 1, this sequence being repeated in the same order.

It should be noted however that the write speed in the buffers is higher than the readout speed. Thus, when the write/readout for the buffers is carried out as regularly, such a state may be obtained in which, when the readout is carried out from a given buffer, for example, data is stored substantially steadily in the other buffers.

It is assumed that the processing of decryption/ demodulation for the contents A has come to a close e.g. at a timing t4, and that the writing of the digital audio data as the contents A also has come to a close e.g. with the writing in the buffer 3. If, in this case, the data readout from the buffer 1 is executed until the time point t4, such a state is achieved, after time point 14, in which data is stored in the buffers 2 and 3. Thus, by the transfer processing to the reproducing/ outputting system as from the time point t4, the data read out from the buffer 2 is transmitted and reproduced/ output, and the data read out from the buffer 3 then is transmitted and reproduced/ output.

If the unit reproducing time, corresponding to the usual recording capacity of the buffer 2, is Ts, as shown, readout of the contents A is enabled by the transfer processing to the reproducing/ outputting system during the time represented by this unit reproducing time Ts × 2.

Since the processing of decryption/ demodulation for the contents is terminated at the time point t4, the tamper check processing for the contents B commences at this time point t4.

It is now assumed that the time duration for tamper check processing of the present embodiment is roughly longer than the unit reproducing time Ts equivalent to the storage capacity for a buffer, but shorter than the unit reproducing time Ts×2.

Hence, the tamper check processing for the contents B is terminated at a time point t5 comprised within the time interval of t4 to t6 corresponding to the unit reproducing time Ts×2.

In this case, the processing of decryption/ demodulation of the contents B is started at a time point t5, such that the transfer processing to the reproducing outputting system for the contents B is commenced as from the time point t6 corresponding to the time of end of the reproducing period for the contents A. That is, the speech reproduction of the contents B commences at the time point t6, whereby the contents A and B are reproduced as consecutive reproducing operation.

If, in consecutive reproduction of the contents A and B, the buffer capacities are set to ordinary values, and at least the contents A are of extremely short reproducing time, the reproducing operation may occasionally such a one shown in Fig.6. In this case, the tamper check processing for the contents A is carried out during the time period of t1-t2. In continuation to this time period, the processing of decryption/ demodulation for the contents A is carried out as from the time point t2. However, in this case, the processing of decryption/ demodulation for the contents A comes to a close in a shorter time, in keeping with the shorter reproducing time for the contents A.

In such case, with the write/ readout processing for the buffers 1 to 3, during the time of execution of the processing of decryption/ demodulation for the contents A (t2- t4), in Fig.6, it is solely the buffer 3 that holds data stored therein at time point t4.

That is, since the reproducing time for the contents A is extremely short, the processing of decryption/ demodulation is also carried out for only an extremely short time duration, as a result of which no sufficient differential (delta) between the data quantity stored by the processing of writing in the buffers and the data quantity read out by the readout processing is obtained in the course of the execution of the processing of decryption/ demodulation.

In this case, the time made available by the transfer processing to the reproducing outputting system for the contents A as from the time point t4 is the unit reproducing time Ts corresponding to the data stored in the buffer 3.

Hence, in such case, the transfer processing to the reproduction/ outputting system for the contents A as from time point t4 comes to a close at a time point t4a after approximately the unit reproducing time Ts as from time point t4, and the outputting of the reproduced sound of the contents A ceases at this time point t4a.

On the other hand, since the tamper check processing is a processing continuing for a time period longer than the unit reproducing time Ts, the tamper check processing for the contents B, started at time point t4, keeps on to be executed even after the time point t4a, and comes to a close e.g. at time point t5.

The processing of decryption/ demodulation for the contents B commences at this time point t5. The transfer processing to the reproducing/ outputting system for the contents B is commenced, and hence the speech output of the contents B is also commenced, after the time point t5 and at a time point t6 when the data writing in e.g. the buffer 1 substantially comes to a close.

As a result of the above operations, there is produced a non-reproducing period (t4a- t6a) between the time point t4a, corresponding to the end of the outputting of the reproduced speech of the contents A, and the time point t6, corresponding to the beginning of the outputting of the reproduced speech of the contents B. That is, contents A and B cannot be reproduced in succession.

As typical of the case where continuous reproduction of the contents of extremely short duration becomes necessary, there is, in addition to the case where the actual reproduction time of the contents is extremely short, such a case where contents are to be edited by so-called connective or assembly editing.

That is, in editing the contents by connective editing, the trailing end portion of the leading contents and the leading end portion of the trailing contents, each continuing only for a few seconds, are extracted to repeat continuous reproduction, in order to have the user confirm if the connected portion of the trailing end portion of the leading contents and the leading end portion of the trailing contents, specified to be connected to each other, are in meeting with the user's intention.

The reproducing operation of reproducing the trailing end portion of the leading contents and the leading end portion of the trailing contents is equivalent to the case shown in Fig.6, in which contents B are reproduced in succession to the contents A with an extremely short reproduction time. Hence, the risk is high that the trailing end portion of the leading contents and the leading end portion of the trailing contents may not be reproduced consecutively.

If, in connective editing, it may be confirmed whether or not the connected state is optimum, the trailing end portion of the leading contents and the leading end portion of the trailing contents must be reliably reproducible in succession.

Thus, if, in the instant embodiment of the present invention, the reproducing time at least of the encrypted contents to be reproduced first, out of the two encrypted contents to be reproduced successively, is less than a preset time length, such that successive reproduction may not be guaranteed with the usual buffer capacity setting values, a certain buffer capacity, retained to be larger than the usual capacity, is set. This newly set buffer capacity is referred to below as the "buffer capacity for successive reproduction for short time duration".

This setting change of the buffer capacity may be implemented by changing area setting of the buffers 1 to 3 in the buffer area 20a in the RAM 20, under control by the CPU 11. That is, if an area corresponding to a capacity A is allocated to each of the buffers 1 to 3, as usual buffer capacity, area allocation is made for each of the buffers 1 to 3, in setting the buffer capacity for successive reproduction for short time duration, so that each of the buffers 1 to 3 will be of a preset capacity B larger than the capacity A.

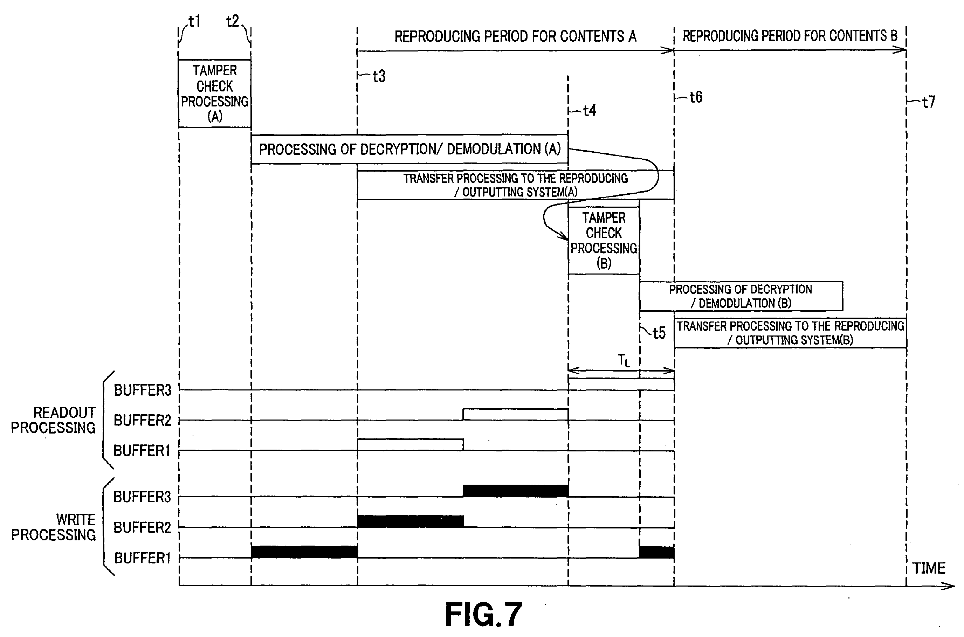

The timing chart of Fig.7 shows the operations in which, as the buffer capacity is set to the buffer capacity for successive reproduction for short time duration, the contents B are reproduced in succession to the contents A having the short reproducing time, as in the case of Fig.6.

In such case, the processing of decryption/ demodulation is commenced as from the time point t2, in succession to the tamper check processing for the contents A for the time period of t1-t2. As this processing of decryption/ demodulation proceeds, writing is started, beginning from the buffer 1 at the same time point t2. It is seen that, since the capacity larger than the usual value is afforded to each of the buffers 1 to 3, the time needed until the end of the writing in the buffer 1 is correspondingly longer. Hence, the time duration as from the time point t2 until the time point t3 when the transfer processing to the reproducing/ outputting system for the contents A commences is longer than the time duration of t2 to t3 shown in Fig.6. In short, the standby time until actually the speech commences to be reproduced and output, at the time of the start of reproduction, becomes longer.

In this case, such a state is shown in which, after a time point t4 when the processing of decryption/ demodulation for the contents A, for example, has come to a close, data is stored only in the buffer 3, out of the buffers 1 to 3. Hence, as from the time point t4, the operation of reading out the data stored in the buffer 3, with the progress of the transfer processing to the reproducing/ outputting system for the contents A, and reproducing/ outputting the so read-out data, is carried out. This operation is carried out for a reproducing time TL corresponding to the capacity of the buffer 3. Since the reproducing time TL corresponds to the buffer capacity for successive reproduction for short time duration, the reproducing time TL is longer than the unit reproducing time Ts related to the usual buffer capacity. However, the time needed for the tamper check processing is substantially constant, without dependency on e.g. the reproducing time for the contents.

In this case, the tamper check processing for the contents B, carried out as from the time point t4, comes to a close at the time point t5 after a time duration approximately equal to that in Fig.6. This time point t5 is well before timing t6 when the operation of reading out and reproducing/ outputting data stored in the buffer 3 comes to a close, as shown. That is, in the present case, the tamper check processing for the contents B is completed during the time the digital audio data for the contents A are being reproduced/ output. In this case, the processing of decryption/ demodulation for the contents B is carried out as from the time point t5 and, after lapse of a certain time as from time point t5, that is, at the time point t6, the transfer processing to the reproducing outputting system of the contents B is started as regularly, in place of the speech reproduction/ outputting of the contents A, which has just come to a close. In short, the speech reproduction/ outputting of the contents A commences.

It will be appreciated that, by setting the other buffer capacity of a value larger than the usual value, speech continuity may be maintained even in case of successive reproduction for encrypted contents including encrypted contents of short reproduction time.

In the present embodiment, the buffer capacity is set to a usual value for regular cases. For the regular cases, when the encrypted contents are consecutively reproduced, the reproducing time duration of the encrypted contents exceeds a certain preset value, so that it is possible to maintain continuity in the reproduction, as explained with reference to Fig.5.

Since the buffer capacity for these cases is set so that the standby time until actual start of speech reproduction at the time of start of reproduction will be in a tolerable range, the user has no alien feeling with the standby time under the usual use state.

However, the buffer capacity is switched to the buffer capacity for successive reproduction for short time duration on the occasion of confirmative reproduction for the connecting position in the connective editing as previously explained, or consecutive reproduction of encrypted contents in succession to the encrypted contents of an extremely short reproduction time shorter than a certain preset reproduction time. This assures continuity of reproduction even in case of reproducing the encrypted contents of extremely short time duration of reproduction, as shown in Fig.7.

As may be seen from the time duration as from the time point t2 until time point t3, shown in Fig.7, the buffer capacity for successive reproduction for short time duration is larger than the usual buffer capacity, with the result that the reproduction standby time as from the start of reproduction processing until start of the speech outputting is protracted. However, the connective editing or reproduction of encrypted contents with extremely short reproduction time represents specialized reproduction, distinct from the reproduction of usual encrypted contents, and is carried out less frequently. That is, the reproduction standby time is protracted transiently only on occasions, retained to be special occasions, thus raising no particular problem in the actual use the recording and/or reproducing apparatus 1.

Such a case will now be explained in which relevant data other than the audio data, termed fringe data, is annexed to each of the encrypted contents as audio data.

The fringe data, annexed as the relevant data to the encrypted contents, may be exemplified by picture data, such as album jackets, pertinent to related encrypted contents, picture data for representing artist' profiles or liner notes, and text data.

These fringe data are correlated with the encrypted contents as audio data and supervised in this state. These fringed data, thus managed, are stored as files distinct from the files of the encrypted contents as audio data. A plural number of these fringe data may also be associated with sole encrypted contents, in the form of, for example, data of plural album jackets or data of plural lyrics.

If these fringe data are picture data, for example, the data are compressed in accordance with a preset picture compression system, and further are encoded for encryption.

If, in reproducing the encrypted contents, the fringe data are decoded, pictures of album jackets or the lyrics may be demonstrated on the display monitor 17 when the encrypted contents are reproduced/ output as speech.

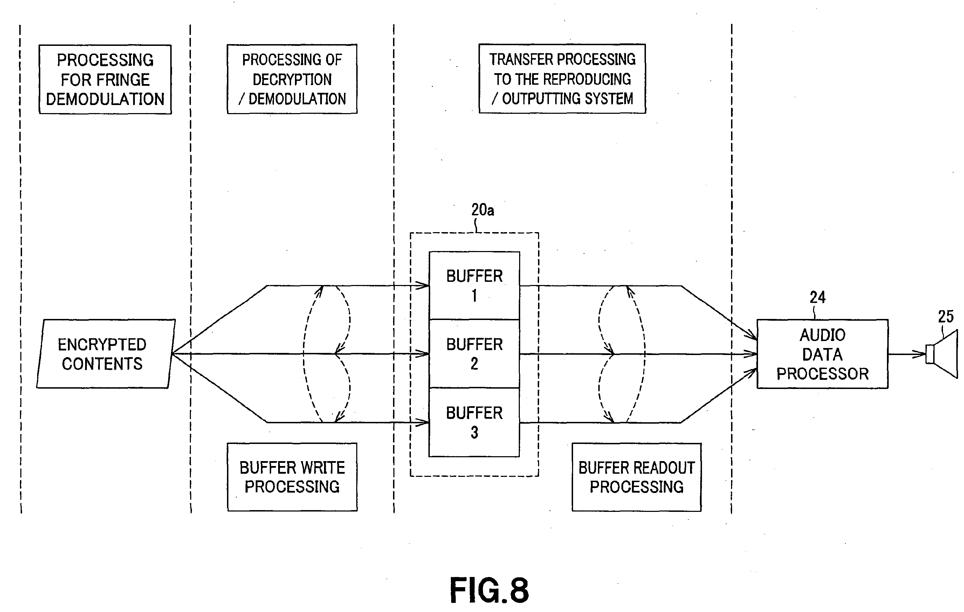

Referring to Fig.8, the processing sequence for outputting the encrypted contents, along with the fringe data, annexed thereto, as speech, will now be explained with reference to Fig.8, in which the case of reproducing/ outputting sole encrypted contents is shown. It is assumed, for simplicity of explanation, that the encrypted contents being reproduced are stored on the HDD 21.

It should be noted that the reproduction processing for the encrypted contents, as now explained, is generally applicable to variable cases for reproducing encrypted contents by the recording and/or reproducing apparatus 1 shown in Fig.1, e.g. a case where encrypted contents recorded on a recording medium are read out by the medium drive 19 and reproduced, or a case where encrypted contents acquired over a network are reproduced.

Before decoding the encrypted contents for reproduction, recorded on the HDD 21, the decoding of the encryption of the fringe data and demodulation (decompression) of the encoding thereof for compression, referred to below as processing for fringe demodulation, are carried out.

This processing for fringe demodulation is carried out by the CPU 11 in accordance with the program for reproducing the encrypted contents. That is, the processing for fringe demodulation is carried out not by hardware, but by software. Meanwhile, the program for reproducing the encrypted contents is installed and stored on the HDD 21. When the program is to be run, it is read out from the HDD 21 so as to be temporarily stored in the RAM 20.

For this processing, the HDD 21 is instructed to read out target fringe data. Responsive thereto, the fringe data is read out from the HDD 21 and thence transmitted over bus 12 to the CPU 11. The CPU 11 performs the processing of decoding the encryption of the transferred data, as the RAM 20 is utilized as a work area. The decrypted fringe data is in the form e.g. of a picture encoded for compression, and hence is subjected to decompression which is the reverse of the encoding for compression. The fringe data, thus demodulated, is held e.g. on the RAM 20.

In the present embodiment, the demonstration/ outputting of the fringe data is carried out e.g. simultaneously with start of speech reproduction of the encrypted contents. However, since the processing of decoding the fringe data represents relatively heavy processing for the CPU 11, it is difficult to execute the processing of decoding the fringe data in time for the start of the speech reproduction/outputting of the decrypted version of the encrypted contents, even if the processing of decoding the fringe data is carried out simultaneously with the processing of decryption/ demodulation of the encrypted contents.

For this reason, the fringe data is decoded, in the present embodiment, prior to decoding the encrypted contents. In case the fringe data are as-decoded data, it is only sufficient to transmit the fringe data to e.g. the display processor 16 for demonstration. Thus, the fringe data may be displayed/ output, simultaneously with start of the speech reproduction/ outputting of the encrypted contents, by transmitting the as-decoded fringe data to the display processor 16 in synchronism with the speech reproducing/ outputting timing of the encrypted contents.

When the above-described processing for fringe demodulation is retained to have come to a close, the processing of decryption/ demodulation is carried out for the encrypted contents, which are read out and sequentially transmitted from the HDD 21.

The processing of decryption/ demodulation is carried out by the CPU 11 in accordance with the program for reproducing the encrypted contents. Specifically, the CPU decodes the encryption of data of the encrypted contents, transmitted thereto, from one preset processed data unit to another. The CPU also demodulates (decompresses) the decoded contents data matched to the compression encoding system used. This yields as-decompressed digital audio data.

The data string, as digital audio data, thus obtained on decryption/demodulation, is sequentially written, by buffer write processing, in the plural buffers, obtained on splitting the buffer area 20a.

It should be noted that the processing of decryption/ demodulation is the processing of demodulating the digital audio data by decrypting and decompressing the encrypted contents to yield demodulated digital audio data, that is, the processing of decoding the encoding for encryption and decoding the encoding for compression. On the other hand, the processing for fringe demodulation is the processing of demodulating the information which itself is not contents data as audio but which is needed as ancillary data in reproducing/ outputting the contents data.

Meanwhile, in the present embodiment, as in the recording and/or reproducing apparatus, described above, plural buffers are provided in the buffer area 20a, as shown in Fig.8. Here, three buffers 1 to 3 are provided. Moreover, it is assumed that the capacities of these buffers are the same, and that, in actuality, the buffers are formed as a ring buffer.

In such case, the processing for writing in the buffers is carried out as follows:

In a stage prior to the start of the processing of decryption/ demodulation, the buffers 1 to 3 are all in the vacant states. When the processing of decryption/demodulation has commenced, and it is timing for writing data in the buffers, data is written first in the buffer 1. When data has been written in the buffer 1 to its full capacity, data is written in the buffer 2 and, when data has been written in the buffer 2 to its full capacity, data is written in the buffer 3. For confirmation sake, data writing in the buffers is carried out at a rate higher than the data readout rate from the buffers. On the other hand, data written and stored in the buffers 1 to 3 exhibit temporal continuity under ordinary conditions. That is, the data thus written and stored are continuous data in terms of the reproduced output sound.

If, in the course of a process in which writing is commenced in the buffer 1 and sequentially executed in the next buffers 2 and 3, data is stored in the buffer 1 in more than a predetermined volume, data commences to be read out, at a preset data rate, beginning from the data initially stored in the buffer 1, by way of performing memory readout from the buffer area 20a.

Turning to the readout processing from the buffers, when the entire data stored in the buffer 1 has been read out, data stored in the buffer 2 is read out. The data stored in the buffer 2 are then read out. When the entire data stored in the buffer 2 has been read out, data stored in the buffer 3 is read out.

Turning to the processing for writing in the buffers, when the writing is completed up to the buffer 3, data is written as from the buffer 1 from which data has been completely read out and which has now become void. In similar manner, data is then written sequentially in the buffers 2 and 3, from which data has been completely read out and which have now become void.

That is, as for the processing of writing in the buffers 1 to 3, the writing repeatedly occurs in the order of the buffers 1, 2 and 3, specifically, data is written in the buffers in the vacant state, at a predetermined data rate.

As for data readout from the buffers 1 to 3, data are read out from the buffers 1, 2 and 3, in this order, at a rate slower than the write rate, with a time delay corresponding to storage of a quantity of data not less than a predetermined quantity by data writing.

With this write/ readout processing for the buffers 1 to 3, data is stored in at least one of the buffers 1 to 3, as long as there is produced no so-called memory underflow, thus assuring continuity of reproduced data. If, in the readout operation described above, the write processing in the buffers is such that, in case data is stored in the totality of buffers, data writing is discontinued and, when the buffer in which writing is to be made first in the write sequence has become void, data writing is commenced. That is, the operation may become intermittent, at least insofar as the processing of writing in the buffers is concerned.

In accordance with the above-described processing for writing/ readout for the buffers, transfer processing to a reproducing/ outputting system is commenced in synchronism with start of readout of data from the buffers.

This transfer processing to the reproducing/ outputting system is carried out by the CPU 11 in accordance with the program for reproducing the encrypted contents, and is such a processing in which data read out from the buffer is transmitted to a reproduction signal processing system (reproducing/ outputting system) for reproducing/ outputting the readout data.

The reproduction signal processing system (reproducing/ outputting system) in this case is the audio data processor 24 in the apparatus shown in Fig.1. The transfer processing for the reproducing/ outputting system is such a one in which data read out from the buffers is transmitted over bus 12 at a desired data rate such that continuity of audio data to be reproduced and output will be maintained in the audio data processor 24.

The processing of writing data in the buffers is the processing of writing digital audio data by processing of decryption/ demodulation in the buffers. The data read out from the buffers is transferred to the audio data processor 24 by the transfer processing to the reproducing/ outputting system. Thus, there is a time interval during which the processing of processing of decryption/ demodulation occurs in parallel and simultaneously with the transfer processing to the reproducing/ outputting system.

The audio data processor 24 is continuously supplied with digital audio data read out from the buffers as described above. The audio data processor performs preset signal processing, inclusive of D/A conversion, on the digital audio data, thus supplied thereto, such that the data is ultimately output as speech from the loudspeaker 25. It is noted that, as long as continuity of the digital audio data, supplied to the audio data processor 24, is maintained, continuity as speech of the contents, output from the loudspeaker 25, may also be maintained.

Meanwhile, the data transfer processing to the display processor 16 for reproducing/ outputting (demonstrating/ outputting) the fringe data, demodulated by the processing for fringe demodulation, may be carried out at a start timing substantially concurrent as the transfer processing to the reproducing/ outputting system for the above-mentioned audio data, although such is not specifically shown in Fig.8.

As may be understood from the above explanation, which refers to Fig.8, it may be said that there are three basic processing operations (reproduction processing operations for coping with the encrypted contents) to be carried out by the CPU 11 in accordance with the program for reproducing the encrypted contents in reproducing and outputting given encrypted contents, that is, processing for fringe demodulation including reproduction processing for coping with encrypted contents),
processing of decryption/ demodulation, and
transfer processing to the reproducing/ outputting system. The processing for fringe demodulation is the processing for demodulating the fringe data such as pictures of album jackets relating to the contents. As for this processing for fringe demodulation, it is prescribed that the fringe data shall be decoded to a state enabling the data to be reproduced/ output, for e.g. display, before reproduction/outputting of the speech as contents commences. The processing for fringe demodulation in such case therefore is to be carried out necessarily in a pre-stage to the processing of decryption/ demodulation. In short, as long as one given contents are a target, the processing for fringe demodulation for the contents and the processing of decryption/ demodulation for the contents are not carried out simultaneously, but the executing sequence of the processing for fringe demodulation 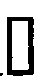 processing of decryption/ demodulation is to be observed. However, there are occasions where the processing for fringe demodulation and the transfer processing to the reproducing outputting system are carried out simultaneously in parallel, as described above.

It is noted that the buffer write processing for the buffer area 20a is ancillary to the processing of decryption/ demodulation, while the readout processing is ancillary to the transfer processing to the reproducing/ outputting system.

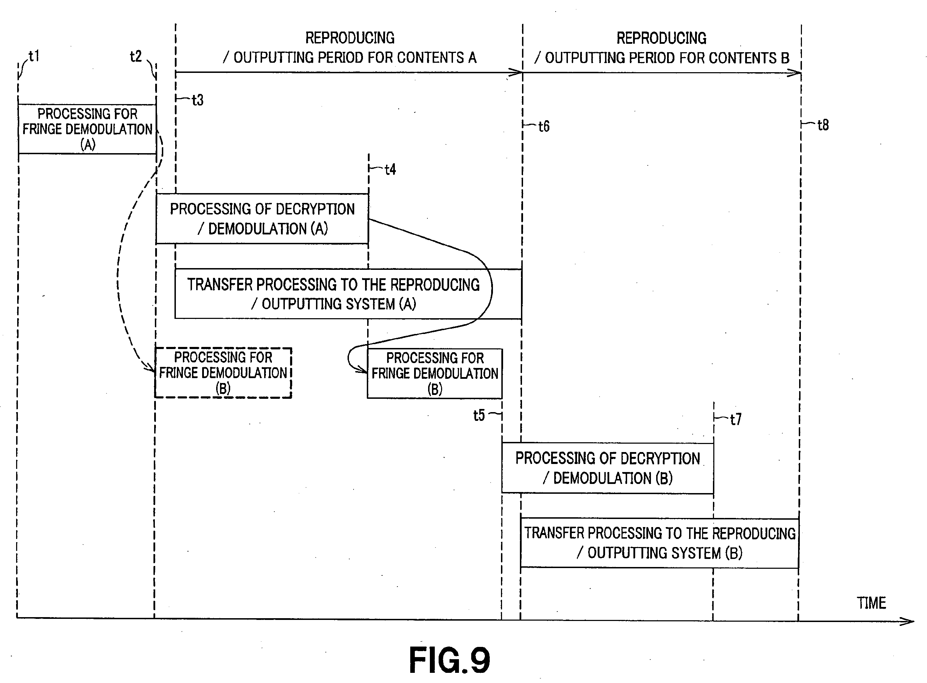

With the sequence of reproduction processing, configured to cope with the given one encrypted contents, shown in Fig.8, as premises, the reproduction processing, configured to cope with encrypted contents, in case of successive reproduction of encrypted contents, will now be explained with reference to the timing chart of Fig.9.

Here, a case of commencing contents reproduction from the contents A, and then reproducing the contents B in succession, is taken as an example for explanation.

In case a command for starting the reproduction of the contents A is received, the processing for fringe demodulation for the contents A is first carried out at a time point t1.

The time needed for the processing for fringe demodulation is made to differ depending on the particular fringe data to be demodulated. For example, the picture size or the resolution of the fringe data in the instant embodiment is specifically not unified. Hence, the time needed for the processing for fringe demodulation for the individual fringe data differs depending on the picture size or the resolution thereof.

The number of the fringe data to be annexed to one given encrypted contents may be plural, as discussed previously. Since there is also no particular limitation to the number of the fringe data to be related to one contents, the number of files as annexed fringe data differs from encrypted contents to encrypted contents. Consequently, the time needed for the processing for fringe demodulation differs with the number of the fringe data to be demodulated.

It is assumed that the processing for fringe demodulation for the contents A has come to a close at a time point t2 when certain time has elapsed as from the time point t1. The processing of decryption/ demodulation for the contents A is made to commence at this time point t2.

The operation of storing the digital audio data, obtained by the demodulation processing, in the relevant buffer of the buffer area 20a, is commenced responsive to the start of the processing of decryption/ demodulation for the contents A. Readout from the buffer area becomes possible after lapse of certain time when the stored capacity in the buffer exceeds a preset quantity. This timing is indicated by a time point t3.

Thus, the transfer processing to the reproducing/ outputting system for the contents A is commenced at the time point t3. This transfer processing is the processing of transferring the digital audio data, read out from the buffer, to the audio data processor 24 as the reproducing/ outputting system.

The outputting of the reproduced sound, as the contents A, commences at this time point t3.

For example, the processing of decryption/ demodulation of the encoded data as the contents A comes to a close at a time point t4. At this time point t4, writing in the buffer of digital audio data of the contents A, obtained on decryption/demodulation, also comes to a close. At this time, the digital audio data, not read out as yet, are stored in the buffer.

Hence, the transfer processing to the reproducing/ outputting system for the contents A is continued, even after the time point t4, until the totality of the data stored in the buffer is read out. In this case, the transfer processing to the reproducing/ outputting system for the contents A comes to a close at a time point t6 and, in keeping therewith, the reproduced/ output sound as the contents A is to come to a close at the time point t6. From this it follows that the reproducing/outputting time period, during which the contents A are reproduced and output, is the time period as from time point t3 until time point t6.

The reproducing processing for coping with the encrypted contents for the contents B, to be reproduced next in succession to the contents A, is carried out as follows:

For reproducing the contents A and B in succession, in this order, the start timing of the transfer processing to the reproducing/ outputting system for the contents B needs to be contiguous to the end timing of the transfer processing to the reproducing/ outputting system for the contents A. That is, in this case, the transfer processing to the reproducing/ outputting system for the contents B needs to be started as from the timing t6 as shown.

Hence, in order to assure that the readout processing from the buffers will be stared as from the time point t6, the processing of decryption/ demodulation for the contents B is to be commenced at a time point t5, which precedes the time point t6, as basic time point, by a time duration necessary for storage of a preset quantity of digital audio data.

For this reason, the processing for fringe demodulation for the contents B needs to be carried out in a pre-stage temporally forward of this time point t5.

Thus, in the case shown in Fig.9, the processing for fringe demodulation for the contents B is carried out in succession to the end of the processing of decryption/ demodulation for the contents A, as a processing sequence in such case. That is, the processing of decryption/ demodulation for the contents A has come to a close at the timing t4 in Fig.9, and the processing for fringe demodulation for the contents B is commenced at this time point t4.

The processing for fringe demodulation for the contents B is to be completed by the time point t4 when the processing of decryption/ demodulation for the contents B commences.

Meanwhile, it may be conjectured that the timing for starting the processing for fringe demodulation for the contents B may be the timing directly following the end of the processing for fringe demodulation for the contents A. That is, the processing for fringe demodulation for the contents B may be started at a timing t2, as indicated by a broken line rectangle in Fig.9.

This means that, as for the processing for fringe demodulation, the processing for fringe demodulation of the encrypted contents, reproduced next, is to be carried out next to the processing for fringe demodulation of the encrypted contents currently reproduced. With such processing timing for the processing for fringe demodulation, the processing for fringe demodulation may be completed in a pre-stage of the processing of decryption/ demodulation of the encrypted contents in question.

It should be noted in this connection that, as a matter of actual processing for reproducing the encrypted contents, the processing of fringe demodulation and the processing of decryption/ demodulation, out of the above three processing operations, namely the processing for fringe demodulation, processing of decryption/ demodulation and the transfer processing to the reproducing outputting system, represent heavy processing with a higher take-up ratio for the CPU 11. Conversely, the transfer processing to the reproducing/ outputting system represents lighter processing, with a low take-up ratio for the CPU 11, because this processing simply issues a command for transferring the digital audio data, read out from the buffers, over bus 12, with the take-up ratio for the CPU 11 being correspondingly low.

If the processing for fringe demodulation of the encrypted contents, reproduced next, is to be carried out in succession to the processing for fringe demodulation of the encrypted contents, currently reproduced, as described above, there is produced a time period during which the processing of decryption/demodulation for the contents A and the processing for fringe demodulation for the contents B are carried out concurrently after time point t2. That is, from the perspective of the CPU 11, the two processing operations, retained to be high in the CPU take-up ratio, are carried out during this time simultaneously, thus accounting for the considerably high actual CPU take-up ratio.

With this state of processing by the CPU 11, there is a risk that delay is caused to the processing operations, carried out simultaneously, depending on the performance of the CPU 11. Hence, the processing speed needed for the processing of decryption/ demodulation for the contents A cannot be maintained to cause underflow in the buffers, thus possibly causing inconveniences, such as interruption of the voice of the reproduced output.

Moreover, there are occasions where a program of an application other than the application of reproducing encrypted contents is run on the recording and/or reproducing apparatus 1 according to the present invention. For example, since the recording and/or reproducing apparatus 1 of the present embodiment has e.g. a networking function, it is probable that an application such as a Web browser, exploiting this function, or a mailer for transmitting/ receiving an E-mail, is installed on the HDD 21, and booted for operations, as necessary.

If, when the reproducing processing program for the encrypted contents and the other application programs, such as those described above, for example, are run, the state of a high CPU take-up ratio, as indicated by the time period of t2 to t4, is produced, the probability is high that interruption of the reproduced output speech, as described above, is produced. Conversely, the operation of other application programs may become heavy, such that the operation may be slowed down.

Thus, in case plural heavy processing operations, retained to be high in the CPU take-up ratio, are carried out simultaneously in the processing sequence for the reproducing processing for coping with the encrypted contents, it may be feared that undesirable effects may be produced in the operations of the apparatus.

Hence, in the present embodiment, the processing for fringe demodulation for the contents B is made to commence at a time point t4 as the end time point of the processing of decryption/ demodulation for the contents A.

That is, in the present embodiment, the program algorithm is set so that the processing for fringe demodulation for the contents reproduced next will be carried out in succession to the processing of decryption/ demodulation for the contents currently reproduced/ output.

The processing for fringe demodulation for the contents B by the above-described processing sequence is carried out after completion of the processing of decryption/ demodulation for the contents A, by taking advantage of the time during which the digital audio data stored in the buffers are read out and reproduced/ output by the transfer processing to the reproducing/ outputting system for the same contents A.

In the processing sequence, shown in Fig.3, the processing for fringe demodulation for the contents B is terminated at a time point t5 when the processing of decryption/ demodulation for the contents B commences. This shows that it is sufficient if the processing for fringe demodulation for the contents B comes to a close at the time point t5 at the latest. In actuality, the processing for fringe demodulation for the contents B may be terminated at a start time point temporally forward of the start of the processing of decryption/ demodulation for the contents B.

With such processing sequence, the time period during which, in the consecutive reproduction/ outputting of the encrypted contents, the processing of decryption/ demodulation and the processing for fringe demodulation, both of which are high in the CPU take-up ratio, are carried out simultaneously, may be eliminated. In this manner, the CPU take-up ratio, designed to cope with consecutive reproduction of the encrypted contents, may be appreciably lower than in the conventional system.

Thus, it is possible to avoid undesirable operations that the CPU take-up ratio becomes high to render it impossible to maintain continuity of the reproduction output. On the other hand, certain allowance may be afforded to the CPU capacity when other applications, for example, are run simultaneously.

Meanwhile, the setting of the timing of execution of the processing for fringe demodulation for the next contents reproduced, in the present embodiment, shown in Fig.9, is enabled on the premises that the operation of transiently storing the digital audio data decrypted and demodulated in the buffer is carried out.

That is, the time period as from the time of end of the processing of decryption/ demodulation of the contents currently reproduced until the start of the processing of decryption/ demodulation for the next contents is the time period when the digital audio data stored in the buffer is read out and reproduced/ output. Since this time period is such a period during which only the transfer processing to the reproducing/ outputting system for the current contents is carried out without carrying out the processing of decryption/ demodulation, the processing for fringe demodulation for the next contents is carried out during this period.

Thus, for satisfactory execution of the termination of the processing for fringe demodulation for the next contents and the reproduction of the next contents contiguous thereto, it is sufficient that the time duration as from the end of the processing of decryption/ demodulation for the current contents until readout of the digital audio data stored in the buffers to terminate the reproduction/ outputting is longer than the time needed for the processing for fringe demodulation.

If, in the present embodiment, an ordinary presumable time interval is presupposed as the time duration necessary for demodulating the fringe data, the capacity values of the respective buffers in the buffer area 20a are set so that reproduction of the next contents will occur in succession to the end of the reproduction of the next contents.

As will be apparent from the previous explanation, the speech reproduction of the encrypted contents is commenced responsive to the start of the transfer processing to the reproducing/ outputting system, inclusive of the buffer readout processing, after start of the processing for decryption/ demodulation following the processing for fringe demodulation, and a quantity of data in excess of a predetermined quantity is stored in the buffer. That is, the time interval until storage of more than a preset quantity of data in the buffer is a standby time during which the reproduction is not commenced.

Turning to data readout from the buffers, related to start of contents reproduction, in the present embodiment, if there are provided three buffers 1 to 3, data writing in the first buffer 1 to its full capacity is deemed to be the data storage in more than the predetermined amount, and accordingly the readout from the buffers is commenced. If the capacities of the buffers 1 to 3 are increased, the quantity of data storage would be correspondingly increased. However, this is not desirable because the standby time until the start of reproduction is then protracted.

In light of the above, the usual capacities of the buffers 1 to 3 are set, in the present embodiment, in consideration of two conditions, namely
1. the condition that, on the premises that the processing time duration is of the conceivable ordinary value for the processing for fringe demodulation, the end of the processing for fringe demodulation for the next contents and the consecutive reproduction of the next contents are guaranteed, and
2. the condition that the standby time until start of reproduction is comprised within a range that is practically not of a problem,
as described above.

However, there are occasions where the time duration necessary for processing for fringe demodulation exceeds the range retained to be a usual range. In such case, the first condition cannot be guaranteed with the usual capacities of the buffers 1 to 3, such that it may become impossible to maintain the continuity of the reproduction/ output between the current contents and the next contents.

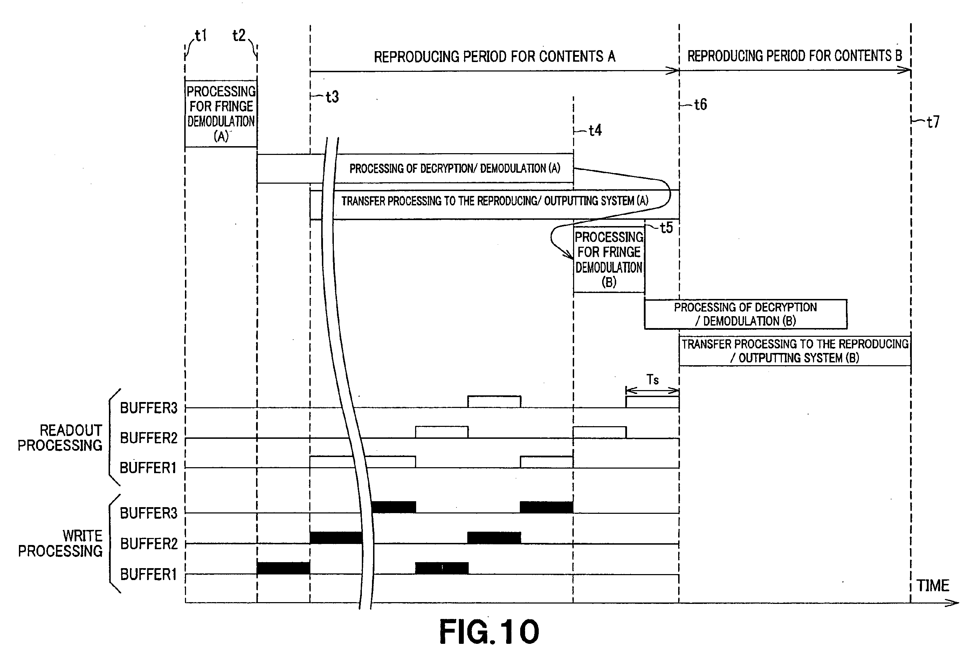

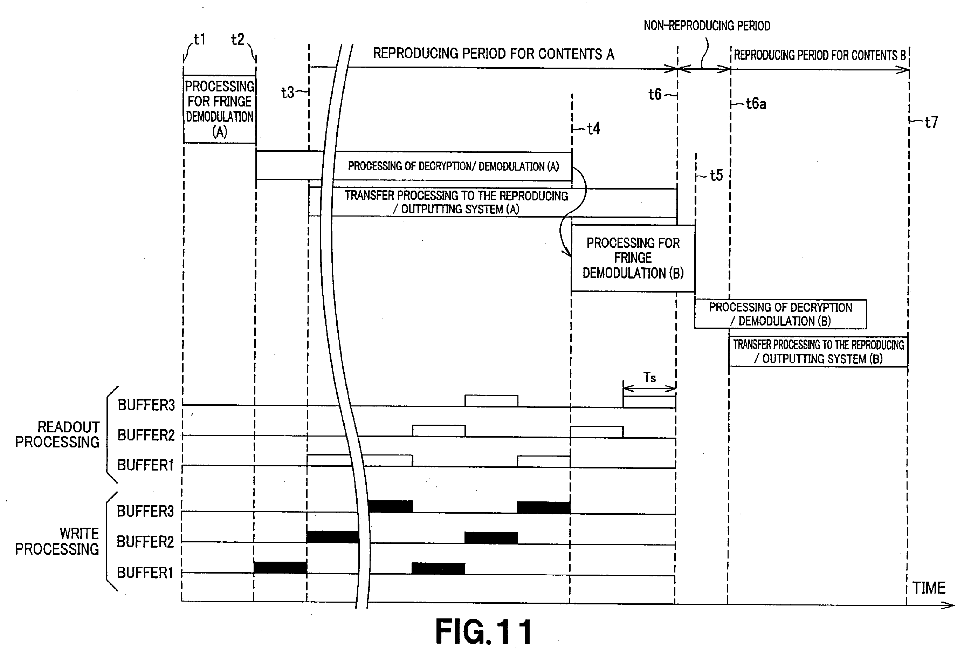

This point will now be explained with reference to Figs. 10 and 11.

Fig.10 shows a case where, in reproducing the encrypted contents A and B, which are to be reproduced successively, at least the contents B, reproduced next to the contents A, are of normally presumable time duration, and the contents A and B are reproduced satisfactorily in succession. In Fig.10, the portions in the buffers 1 to 3, indicated by outline bars, represent the readout time period. On the other hand, the portions in the buffers 1 to 3, indicated by black bars, represent the write time period.

In this case, the processing for fringe demodulation is carried out for the contents A during the period as from the time point t1 until time point t2, and the processing of decryption/ demodulation on the contents A is carried out as from the time point t2. The writing in the buffer 1 occurs responsive to the start of the processing of decryption/ demodulation for the contents A. This writing in the buffer 1 comes to a close at a timing t3. The ensuing processing of decryption/demodulation is writing in the buffer 2, then in the buffer 3 and then in the buffer 1, this sequence being repeated in the same order.

Responsive to the completion of writing in the buffer 1 at the time point t3, the transfer processing to the reproducing/ outputting system for the contents A commences at the time point t3. The readout from the buffer 1 is carried out at the same time point t3. This readout from the buffers is from the buffers 2 and 3, where data have already been stored, in this order, and then from the buffer 1, this sequence being repeated in the same order.

It should be noted however that the write speed in the buffers is higher than the readout speed. Thus, when the write/readout for the buffers is carried out as regularly, such a state is obtained in which, for example, when the readout is carried out from a given buffer, data is stored substantially steadily in the other buffers.

It is noted that the processing of decryption/ demodulation for the contents A comes to a close e.g. at a timing t4, and that the writing in the buffer of the digital audio data as the contents A comes to a close e.g. with the writing in the buffer 3.

If, in this case, the data readout from the buffer 1 is executed until the time point t4, such a state is achieved, after time point 14, in which data is stored in the buffers 2 and 3. Thus, by the transfer processing to the reproducing/ outputting system as from the time point t4, the data read out from the buffer 2 is transmitted and reproduced/ output, and the data read out from the buffer 3 then is transmitted and reproduced/ output.

If the unit reproducing time, corresponding to the usual recording capacity of the buffer 2, is Ts, as shown, readout of the contents A, following the end of the processing of decryption/ demodulation for the contents A at the time point t4, is enabled by the transfer processing to the reproducing/ outputting system during the time represented by this unit reproducing time Ts × 2.

Since the processing of decryption/ demodulation for the contents A is terminated at the time point t4, the processing for fringe demodulation for the contents B is started at this time point t4.

It is now assumed that the time needed for the processing for fringe demodulation for the contents B is roughly longer than the unit reproducing time Ts equivalent to the storage capacity for a given buffer but shorter than the unit reproducing time Ts×2.

Hence, the processing for fringe demodulation for the contents B is terminated at a time point t5 comprised within the time interval of t4 to t6 corresponding to the unit reproducing time Ts × 2.

In this case, the processing of decryption/ demodulation of the contents B is started at a time point t5, such that the transfer processing to the reproducing outputting system for the contents B is commenced as from the time point t6 corresponding to the time of end of the reproducing period for the contents A. That is, the speech reproduction of the contents B commences at the time point t6. It may be seen from this that contiguous reproducing operations for the contents A and B are achieved.

If conversely the processing time needed for the processing for fringe demodulation for the contents B has become longer to exceed the usual range, in consecutive reproduction of the contents A and B, with the buffer capacities set to usual values, the reproduction processing may be such a one shown in Fig.11.

In this case, the processing for fringe demodulation for the contents A is carried out during the time interval t1 to t2. In succession thereto, that is, at a time point t2, the processing of decryption/ demodulation for the contents A is started at the time point t2 and comes to a close at a time point t4, as in Fig.10.

In this case, such a state is obtained in which, at the time point t4, data are stored in the buffers 2 and 3. By the transfer processing to the reproducing outputting system, carried out as from the time point t4, data read out from the buffer 2 is first transmitted and reproduced/ output, and data read out from the buffer then is transmitted and reproduced/ output. Hence, the transfer processing to the reproducing outputting system, carried out for the contents A as from the time point t4, comes to a close after time of Ts×2 as from the time point t4, that is, at a time point t6. At this time point, the output of the reproduced sound for the contents A ceases. As for this respect, there is no difference from the case of Fig.10.

In the present case, the processing for fringe data demodulation for the contents B is retained to take the processing time in excess of the usual range. Hence, the time point t5, as a time point of the end of the processing for fringe demodulation for the contents B, commenced at the time point t4, is temporally backward of the time point t6 when the transfer processing to the reproducing/outputting system for the contents A comes to a close.

The processing of decryption/ demodulation for the contents B can be started only after the end of the processing for fringe demodulation for the contents B. Consequently, the processing of decryption/ demodulation for the contents B is started at the time point t5, which is the end point of the processing for fringe demodulation for the contents B. The transfer processing to the reproducing outputting system for the contents B is commenced after certain time lapse from the time point t5, or at a time point t6a. That is, the outputting of the reproduced sound of the contents B commences at the time point t6a.

With the above-described sequence of operations, there is produced a non-reproducing time as from the time point t6 for the end of the transfer processing to the reproducing/ outputting system for the contents A until the start of the transfer processing to the reproducing/ outputting system for the contents B at a time point t6a. That is, the contents A, B cannot be reproduced in succession.

In case the time needed for processing for fringe demodulation has become longer than the usual range, the processing for fringe demodulation can be carried out despite the fact that the readout of contents data prior to storage in the buffers has come to a close to discontinue the outputting of the speech reproduction to render it impossible to carry out consecutive reproduction of the contents.

Thus, in the present embodiment, if, in case of consecutive reproduction of the encrypted contents, the processing time for the processing for fringe demodulation for the encrypted contents reproduced next is longer than the usual range such that consecutive reproduction cannot be guaranteed with the usual buffer capacity setting values, another buffer capacity, retained to be larger than the usual buffer capacity (referred to below as a 'buffer capacity for coping with long-time processing') is set.

Such change in the buffer capacity setting may be implemented by changing each area setting of the buffers 1 to 3 in the buffer area 20a in the RAM 20, under control by the CPU 11. In short, if an area corresponding to the capacity A is allocated to each of the buffers 1 to 3 as a usual buffer capacity, an area corresponding to a different capacity B larger than the capacity A is allocated to each of the buffers 1 to 3 in setting the buffer capacity for coping with long-time processing.

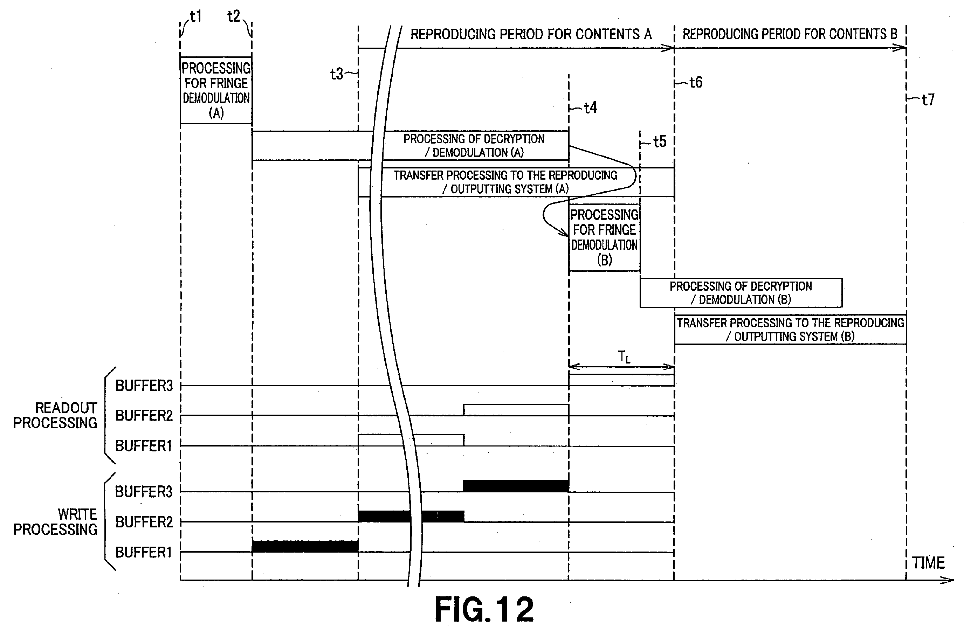

The timing chart of Fig.12 shows the operations in case the buffer capacity for coping with long-time processing is set, and contents B are reproduced in succession to contents A with shorter reproduction time, as in the case of Fig.11.

In this case, the processing of decryption/ demodulation commences at a time point t2, in succession to the processing for fringe demodulation for the contents A for the time period t1-t2. With the progress in this processing of decryption/ demodulation, writing is carried out, beginning from the buffer 1, as from the same time point t2. It may be seen that, since each of the buffers 1 to 3 is set to a capacity larger than the usual capacity, the time needed until the end of writing in the buffer 1 is longer. Hence, the time duration as from time point t2 until time point t3 of start of the transfer processing to the reproducing outputting system for the contents A is longer than the time period of t2-t3 shown in Fig.12. In short, the standby time until actual start of reproduction/ outputting of the speech in starting the reproduction becomes longer.

In this case, data is shown to be stored only in the buffer 3, out of the buffers 1 to 3, in a stage of a time point t4 when the processing of decryption/demodulation for the contents A, for example, has come to a close. Hence, as from the time point t4, the operation of reading out and reproducing/ outputting the data stored in the buffer 3 is carried out as the transfer processing to the reproducing/outputting system for the contents A proceeds. This readout operation is carried out during the time period of the reproducing time TL corresponding to the capacity of the buffer 3. It is noted that the unit reproducing time TL corresponds to the buffer capacity for coping with long-time processing and hence is longer than the unit reproducing time Ts corresponding to the usual buffer capacity.

In short, with the setting of the buffer capacity for coping with long-time processing, the time period as from the end of the processing of decryption/demodulation until the end of the transfer processing to the reproducing/ outputting system is protracted. In short, the time duration of the time period t4-t6 in Fig.12 is longer than the time period t4-t6 in Fig.11.

In this case, the processing for fringe demodulation for the contents B, carried out as from the time point t4, again comes to a close after the time equivalent to that in Fig.11, or at a time point t5. However, since the time period t4-t6 is protracted, as described above, the time point t5 when the processing for fringe demodulation for the contents B comes to a close is temporally forward of the time point t6 when the transfer processing to the reproducing outputting system for the contents A comes to a close.

In this case, the processing of decryption/ demodulation for the contents B commences at the time point t5 when the processing for fringe demodulation for the contents B comes to a close, while the transfer processing to the reproducing/outputting system for the contents B commences after lapse of certain time as from this time point t5, that is, at the time point t6. In short, the transfer processing to the reproducing outputting system for the contents B commences directly after the end of the transfer processing to the reproducing outputting system for the contents A, thus assuring consecutive reproduction of the contents A and B.

It will be understood that, by setting the different buffer capacity to a value larger than the usual capacity value, it is possible to maintain the continuity of the reproduced sound even in such case the time longer than the usual time is needed for the processing for fringe demodulation.

With the present embodiment, described above, switching is made between the usual buffer capacity and the buffer capacity for coping with long-time processing. This switching of the buffer capacity is to be carried out by the CPU 11 in accordance with e.g. a program for reproducing encrypted contents.

In short, when the CPU 11 has recognized that the processing time needed for the processing for fringe demodulation for contents data reproduced next to contents data retained to be currently reproduced, the CPU sets the usual buffer capacity. In this case, it is possible to maintain the continuity of the reproduced sound for the encrypted contents, reproduced in succession, as explained for example with reference to Fig.10.

Conversely, when the CPU 11 has recognized that the processing time needed for the processing for fringe demodulation for contents data reproduced next is so long as to exceed the usual range, the CPU switches the buffer capacity to the buffer capacity for coping with long-time processing. Hence, it is possible to maintain the continuity of the reproduced sound for the encrypted contents with short reproducing time, as shown in Fig.12.

In determining whether the processing time for fringe data is within or exceeds a usual range, it is sufficient if the type, such as contents or data size of fringe data or the encoding for compression, is recognized from e.g. the information stored in a header appended to the fringe data, and to get the processing for estimating the processing time for the fringe data executed based on the results of recognition.

In the case shown in Fig.12, the change of the buffer capacity responsive to the fringe data processing time is to be made at a timing of starting the buffering of data of the encrypted contents temporally directly forward in the reproduction sequence of the encrypted contents related to the processing time of the fringe data. This, however, is merely illustrative.

It may be said that, for enabling consecutive reproduction of contents for coping with the case where the processing time for the fringe data exceeds the usual range, it is sufficient if the buffer capacity is switched to that for coping with long-time processing at a timing a certain time before the start of the processing of the fringe data at the latest, for example even during reproduction of the directly previous encrypted contents.

Thus, it may be contemplated to effect capacity switching sequentially, beginning from a buffer which has become void, at a reasonable timing a preset time before the start of the processing of the fringe data of interest, even during reproduction/ outputting of data of encrypted contents directly previous in the reproduction sequence to encrypted contents associated with the fringe data.

It may also be said that there is no particular limitation to the timing of giving the decision on the processing time for fringe data, if only the decision is given at a preset timing previous to the timing of changing the buffer capacity.

The present invention is not limited to the above-described embodiments

For example, in the above explanation of the preferred embodiments, the buffer capacity switching is carried out in two steps. The buffer capacity switching may also be carried out in three or more steps, depending on, for example, the time needed for processing the fringe data.

In the above-described embodiments, the area sizes of the buffers 1 to 3 are allocated in the buffer area 20a in the RAM 20. Alternatively, a memory device, operating as a buffer, may be provided in addition to the RAM 20. In such case, it may be contemplated to provide separately a memory device having capacities as the buffers 1 to 3 corresponding to the usual buffer capacity and another memory device having capacities as the buffers 1 to 3 corresponding to the buffer capacity for coping with long-time processing. If, in the buffer write/ readout processing, the usual buffer capacity, or the buffer capacity for coping with long-time processing, is set, the write/ readout for the former type memory device or the write/ readout for the latter type memory device, may be executed, respectively. With this configuration, it is similarly possible to realize the operation of changing the capacity of data storage means according to the present invention.

In addition, in the above-described embodiment, the encoding performed on the contents to be reproduced is not limited to the encoding for compression or to the encoding for encryption. In keeping therewith, the actual processing for decrypting the contents or for pre-decrypting processing related to the decrypting processing may suitably be changed.

The contents encoded may, for example, be video data instead of audio data.

In the foregoing explanation, it is the program run on the CPU 11 that implements the operations according to the present invention. This program is installed/ stored e.g. in the HDD 21 or ROM 13.

Alternatively, the program may be stored (recorded), transiently or permanently, in a removable recording medium, such as a CD-ROM (Compact Disc Read Only Memory), an MO (magnet optical) disc, a DVD (Digital Versatile Disc), a magnetic disc or a semiconductor memory. This removable recording medium may also be provided as so-called package software.

For example, in the present embodiment, the program may be recorded in a recording medium that can be coped with by the medium drive 19 and provided as package software. By so doing, the recording and/or reproducing apparatus 1 is able to read out the program from the recording medium by the medium drive 19 and installed (stored) in the HDD 21 or in the ROM 13. Moreover, since the program is supplied as the package software, the program of the system embodying the present invention may be installed in e.g. a general-purpose personal computer.

In addition to being installed from the above-described removable recording medium, the program may also be downloaded e.g. from a server, having stored the program, over a network, such as LAN (Local Area Network) or the Internet.

Furthermore, an update program for late addition of the function(s) embodying the present invention may be constructed and distributed as package medium or over the network. It is only sufficient for a user to acquire this update program and install it on an environment where the pre-existing systems are pre-installed.

The present invention is not limited to the above embodiments, explained with reference to the drawings, and various changes, substitutions or equivalents that may be undertaken by those skilled in the art may be made without departing from the scope and the purport of the invention as defined in the claims.

### Industrial Applicability

The present invention has, as the subject of information processing, unit data (contents data) reproduced on executing the processing of decoding of decryption/demodulation) and pre-processing of decoding that needs at any rate to be carried out at a timing prior to the start of the processing of decoding.

In reproducing/ outputting the plural unit data in succession, the pre-processing of decoding for unit data reproduced next to the unit data currently reproduced/ output is started at timing after the end of the processing of decoding for the unit data currently reproduced/ output. The pre-decoding for the unit data reproduced next is carried out during the time the reproduction/ outputting of the unit data currently reproduced/ output is continued by reading out data stored in storage means (storage area).

By so doing, there is no time period when the processing of decoding on the unit data currently reproduced and pre-decoding processing on the unit data currently reproduced and the processing of decoding on the unit data to be reproduced next are carried out simultaneously in parallel. This assures that there is no increase in the processing load caused by simultaneous execution of the pre-decoding processing and the processing of decoding, such that the processing of decoding may be carried out at an optimum speed. Moreover, even when the processing other than the processing of reproducing unit contents is carried out in parallel, there may be certain allowance in the processing capability because the pre-decoding processing and the processing of decoding are not carried out simultaneously.

Thus, according to the present invention, there is no risk that the processing, currently reproduced, including the reproduction/ outputting of the unit data, becomes unstable.

Moreover, according to the present invention, the processing of decoding (processing of decryption/ demodulation) on unit data (contents data), and the pre-decoding processing, which is the processing required to be carried out at timing prior to start of the processing of decoding, and which becomes necessary in connection with the reproduction of the unit data, are carried out. If the unit data are to be reproduced/ output in succession, the pre-decoding processing for unit data reproduced next to the unit data currently reproduced/ output is commenced at timing after the processing of decoding of the unit data currently reproduced and output. The pre-decoding processing for the unit data, reproduced next, is carried out by reading out data stored in the storage means, during the time the reproduction/ outputting of the unit data currently reproduced/ output is continued.

First of all, with this configuration, there is no time period during which the processing of decoding on the unit data currently reproduced/ output and the pre-decoding processing on the unit data reproduced next are carried out simultaneously in parallel. This assures that there is no increase in the processing load caused by simultaneous execution of the pre-decoding processing and the processing of decoding, with the result that the processing of decoding may be carried out at an optimum speed.

In addition, the data capacity of the storage means is changed within the time period the decoded data of unit data currently reproduced/ output is stored in storage means, depending on the duration of the processing time, retained to be needed for the pre-decoding processing for the unit data reproduced/ output next.

By so doing, the time duration of the reproduction/ outputting of the unit data after the end of the processing of decoding may also be changed, depending on the duration of the processing time retained to be needed for the pre-decoding processing. In short, even if the processing time needed for pre-decoding processing is relatively long, the successive reproduction/ outputting time of unit data, related to the processing time, may be achieved, with the result that the successive outputting of the unit data may be maintained.

## Claims

1. An information processing apparatus comprising
processing means for carrying out at least a processing of decoding encoded unit data and a pre-decoding processing related to said unit data, said pre-decoding processing being carried out prior to said processing of decoding;
storage means where decoded data obtained on said processing of decoding are written and transiently stored; and
outputting means from which the decoded data stored in said storage means is continuously read out and output as data for reproduction/ outputting;
said processing means commencing the processing of decoding of said unit data after the end of the pre-decoding processing related to said unit data.

2. The information processing apparatus according to claim 1 wherein, if second unit data is reproduced/ output next to first unit data, said processing means commences pre-decoding processing related to said second unit data after the end of the processing of decoding of said first unit data.

3. The information processing apparatus according to claim 1 wherein
said storage means includes a plurality of transient storage areas;
said processing means sequentially writing decoded data, obtained on processing of decoding, in said plural transient storage areas, from one data capacity of said transient storage area to another;
said outputting means reading out the written decoded data each time said decoded data is written in said transient storage area and outputting the data as data for reproduction/ outputting.

4. The information processing apparatus according to claim 1 wherein
said processing of decoding for unit data is the processing of decryption and/or demodulation; and wherein
said pre-decoding processing related to unit data is tamper check processing for said unit data.

5. The information processing apparatus according to claim 1 wherein
said processing of decoding for unit data is the processing of decryption and/or demodulation; and wherein
said pre-decoding processing related to unit data is processing of decryption and/or demodulation for relevant data pertinent to said unit data.

6. The information processing apparatus according to claim 1 wherein
said storage means includes at least one transient storage area and data capacity changing means for changing the data capacity of said transient storage area depending on the length of reproducing time for said unit area.

7. The information processing apparatus according to claim 1 wherein
said storage means includes a plurality of transient storage areas; and
data capacity changing means for changing the data capacity of said transient storage area of said storage means;
said data capacity changing means changing the data area of said transient storage area depending on the duration of processing time needed for said pre-decoding processing relevant to said unit data.

8. The information processing apparatus according to claim 7 wherein, if said pre-decoding processing relevant to unit data is the processing of decryption and/or demodulation of relevant data, related to said unit data, the duration of the processing time needed for said pre-decoding processing is estimated based on the ancillary information added as relevant data.

9. The information processing apparatus according to claim 7 wherein said storage means includes a plurality of sets of transient storage areas, each set being made up of a plurality of transient storage areas and being different in storage capacities;
said data capacity changing means selecting one of transient storage areas of said plural sets depending on the duration of the processing time retained to be needed for said pre-decoding processing.

10. An information processing method comprising
pre-decoding processing relevant to encoded unit data;
processing of decoding for decoding said unit data after the end of said pre-decoding processing;
processing of storage for transiently storing decoded data obtained on said processing of decoding; and
outputting processing for successively reading out said decoded data transiently stored by said processing of storage and for outputting the read-out decoded data as data for reproduction/ outputting.

11. The information processing method according to claim 10 wherein, when second unit data is reproduced/ output next to first unit data, pre-decoding processing relevant to second unit data is commenced after the end of the processing of decoding of first unit data.

12. The information processing method according to claim 10 wherein said processing of decoding is the processing of decryption and/or demodulation and wherein said pre-decoding processing is tamper check processing for said unit data.

13. The information processing method according to claim 10 wherein said processing of decoding is the processing of decryption and/or demodulation and wherein said pre-decoding processing is the processing of decryption and/or demodulation for relevant data related to said unit data.

14. The information processing method according to claim 10 wherein said processing of storage is performed on storage means having at least one transient storage area; said method further comprising
processing of changing the data capacity of said transient storage area depending on the duration of the reproduction time of said unit data.

15. The information processing method according to claim 10 wherein
said processing of storage is carried out for storage means having a plurality of transient storage areas, and wherein the method further comprises
data capacity change processing for changing the data capacity of said transient storage area depending on the duration of the processing time retained to be needed for pre-decoding processing relevant to said unit data.

16. The information processing method according to claim 15 wherein, if said pre-decoding processing relevant to said unit data is the processing of decryption and/or demodulation for relevant data related to unit data, the duration of the processing time, retained to be needed for said pre-decoding processing, is estimated based on the ancillary information annexed to said relevant data.

17. The information processing method according to claim 10 wherein said storage means includes a plurality of sets of transient storage areas, each set being made up of a plurality of transient storage areas and being different in storage capacities;
said data capacity changing means selecting one of transient storage areas of said plural sets depending on the duration of the processing time retained to be needed for said pre-decoding processing.
